(19) Europäisches Patentamt
European Patent Office
Office européen des brevets

(11) EP 2 999 722 B1

(12) **EUROPEAN PATENT SPECIFICATION**

(45) Date of publication and mention
of the grant of the patent:
**05.09.2018 Bulletin 2018/36**

(21) Application number: **14724700.1**

(22) Date of filing: **12.05.2014**

(51) Int Cl.:
**C08F 210/06** (2006.01)   **C08L 23/14** (2006.01)
**C08J 5/18** (2006.01)

(86) International application number:
**PCT/EP2014/059592**

(87) International publication number:
**WO 2014/187686 (27.11.2014 Gazette 2014/48)**

(54) **POLYPROPYLENE FOR FILM APPLICATIONS**

POLYPROPYLEN FÜR FOLIENANWENDUNGEN

POLYPROPYLÈNE POUR DES APPLICATIONS DE FILMS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.05.2013 EP 13168771**

(43) Date of publication of application:
**30.03.2016 Bulletin 2016/13**

(73) Proprietor: **Borealis AG**
**1220 Vienna (AT)**

(72) Inventors:
• **WANG, Jingbo**
**4209 Engerwitzdorf (AT)**
• **GAHLEITNER, Markus**
**4501 Neuhofen/Krems (AT)**
• **LILJA, Johanna**
**06100 Porvoo (FI)**

(74) Representative: **Maiwald Patent- und
Rechtsanwaltsgesellschaft mbH
Elisenhof
Elisenstraße 3
80335 München (DE)**

(56) References cited:
**EP-A1- 2 020 291     EP-A1- 2 065 407
EP-A1- 2 251 361     EP-A1- 2 386 604
EP-A1- 2 610 274**

• **Borealis: "Borclear RB709CF", , 27 September
2010 (2010-09-27), XP055370840, Retrieved from
the Internet:
URL:http://www.b2bpolymers.com/TDS/Boreali
s_Borclear_RB709CF.pdf [retrieved on
2017-05-09]**
• **Anonymous: "Borealis introduces innovative
solutions for bottles, cap...", , 20 May 2008
(2008-05-20), XP055370843, Retrieved from the
Internet:
URL:http://www.nordicnet.net/news/Borealis
-introduces-innovative-solutions-for-bottl
es-caps-a/ [retrieved on 2017-05-09]**

**Description**

The present invention relates to a new propylene copolymer as well as unoriented films made therefrom. Further, the present invention relates to the manufacture of said new propylene copolymer.

Propylene copolymers are very well known and quite often used in the field of film making. In this technical area polymers are required which combine high transparency and high impact strength. Quite often also high flowability of the used polymer is desired to reduce the process costs. However, it is demanding to fulfill all the required demands with one polymer since the improvement of one property is paid on the expense of another property.

EP 0 663 422 defines a heterophasic system which is mixed with linear low density polyethylene. Accordingly, this composition requires a complex mixture to achieve the demands in the technical field of films.

EP 1 664 162 defines a blown film with improved optical properties due to the specific selection of the nucleating agent. The improvement of properties due to the production of a specific propylene copolymer is not addressed.

EP 2 386 604 A1 discloses a polypropylene composition having a melt flow rate $MFR_2$ (230 °C) measured according to according to ISO 1133 of at least 2.0 g/10min, said polypropylene composition comprises a propylene copolymer (C-PP) and a high melt strength polypropylene (HMS-PP), wherein the propylene copolymer (C-PP) (a) has a comonomer content of equal or below 7.0 wt.-%, the comonomers are ethylene and/or at least one C4 to C12 alpha-olefin, and (b) fulfills the equation (I) R + 4.96 x C ≤ 95.66 wherein R is the randomness [%] measured by Fourier transform infrared spectroscopy (FTIR), and C is the comonomer content [wt.-%] measured by Fourier transform infrared spectroscopy (FTIR).

EP 2 065 407 A1 relates to a propylene random copolymer, comprising comonomers selected from the group consisting of ethylene, C4 to C20 alpha-olefins, and any combination thereof, wherein the propylene random copolymer (a) has a comonomer content of at least 3.5 wt.-%, based on the weight of the propylene random copolymer, (b) has a randomness of at least 30 %, and (c) is prepared in the presence of a catalyst system comprising solid catalyst particles, wherein the solid catalyst particles (c1) have a specific surface area of less than 20 m$^2$/g, (c2) comprise a transition metal compound which is selected from one of the groups 4 to 10 of the periodic table or a compound of actinide or lanthanide, (c3) comprise a metal compound which is selected from one of the groups 1 to 3 of the periodic table, and (c4) comprise inclusions not having catalytically active sites.

EP 2 251 361 A1 discloses a process for the preparation of a catalyst being in the form of solid particles comprising the steps of:

- preparing a solution of a complex of a metal which is selected from one of the groups 1 to 3 of the periodic table (IUPAC) and an electron donor by reacting a compound of said metal with said electron donor in an organic liquid reaction medium;
- adding to said solution solid material obtaining a suspension, said solid material - does not comprise catalytically active sites, - has a specific surface area below 500 m$^2$/g, and - has a mean particle size below 100 nm;
- combining said suspension at a temperature of at least 50 °C with at least one transition metal compound resulting in a precipitation of said catalyst being in the form of a solid particle, wherein said transition metal compound is selected from one of the groups 4 to 10 of the periodic table (IUPAC) or a compound of actinide or lanthanide; and
- optionally separating said catalyst; said catalyst being in the form of solid particles, which - have a specific surface area of less than 20 m$^2$/g, and - contain said solid material.

Accordingly, the object of the present invention is to provide a polymer, which enables the skilled person to produce an unoriented film with good optical and mechanical properties in an efficient manner.

The finding of the present invention is to produce a propylene copolymer with rather high melt flow rate for polymers in film technology and being monophasic, while having a moderate to low randomness.

Accordingly, the present invention is directed to an unoriented cast film comprising a propylene copolymer (R-PP) having

(a) a comonomer content in the range of 2.5 to 11.5 mol.-%;

(b) a melt flow rate $MFR_2$ (230 °C) measured according to ISO 1133 in the range of 6.0 to 16.0 g/10min; and

(c) a relative content of isolated to block ethylene sequences (I(E)) in the range of 45.0 to 68.0 %, wherein the I(E) content is defined by equation (I)

$$I(E) = \frac{fPEP}{(fEEE + fPEE + fPEP)} \times 100 \qquad (I)$$

wherein

I(E) is the relative content of isolated to block ethylene sequences [in %];

fPEP is the mol fraction of propylene/ethylene/propylene sequences (PEP) in the sample;

fPEE is the mol fraction of propylene/ethylene/ethylene sequences (PEE) and of ethylene/ethylene/propylene sequences (EEP) in the sample;

fEEE is the mol fraction of ethylene/ethylene/ethylene sequences (EEE) in the sample

wherein all sequence concentrations being based on a statistical triad analysis of $^{13}$C-NMR data.

Further, the present invention is directed to an unoriented blown film comprising a propylene copolymer (R-PP) having

(a) a comonomer content in the range of 2.5 to 11.5 mol.-%;

(b) a melt flow rate MFR2 (230 °C) measured according to ISO 1133 in the range of 1.0 to 4.0 g/10min; and

(c) a relative content of isolated to block ethylene sequences (I(E)) in the range of 45.0 to 68.0 %, wherein the I(E) content is defined by equation (I)

$$I(E) = \frac{fPEP}{(fEEE + fPEE + fPEP)} \times 100 \qquad (I)$$

wherein

I(E) is the relative content of isolated to block ethylene sequences [in %];

fPEP is the mol fraction of propylene/ethylene/propylene sequences (PEP) in the sample;

fPEE is the mol fraction of propylene/ethylene/ethylene sequences (PEE) and of ethylene/ethylene/propylene sequences (EEP) in the sample;

fEEE is the mol fraction of ethylene/ethylene/ethylene sequences (EEE) in the sample

wherein all sequence concentrations being based on a statistical triad analysis of $^{13}$C-NMR data.

Further, the present invention is directed to a process for preparing the unoriented cast or blown film of the present invention comprising the steps of producing the propylene copolymer (R-PP) as defined above, wherein the propylene copolymer (R-PP) has been produced in the presence of

(a) a Ziegler-Natta catalyst (ZN-C) comprises a titanium compound (TC), a magnesium compound (MC) and an internal donor (ID), wherein said internal donor (ID) is a non-phthalic acid ester,

(b) optionally a co-catalyst (Co), and

(c) optionally an external donor (ED),

the propylene copolymer (R-PP) having a comonomer content in the range of 2.5 to 11.5 mol.-%, and extruding the molten propylene copolymer (R-PP) through a slot extrusion die onto a chill roll to cool the polymer to a solid film in case the unoriented cast film is formed, or extruding the propylene copolymer (R-PP) melt through an annular die and blowing it into a tubular film by forming a bubble which is collapsed between nip rollers after solidification in case the unoriented blown film is formed.

Preferably, the propylene copolymer (R-PP) is monophasic. Alternatively or additionally, the propylene copolymer (R-PP) has preferably no glass transition temperature below -20 °C. Surprisingly, the propylene copolymer (R-PP) has high impact and good optical properties even though the melt flow rate MFR$_2$ (230 °C) is relatively high.

Therefore, in one specific embodiment, the present invention is directed to an unoriented film comprising the propylene copolymer (R-PP). More preferably, the present invention is directed to a cast film or a blown film, like air cooled blown film, comprising the propylene copolymer (R-PP).

In the following the propylene copolymer (R-PP) is defined in more detail.

As mentioned above the propylene copolymer (R-PP) is preferably monophasic. Accordingly, it is preferred that the propylene copolymer (R-PP) does not contain elastomeric (co)polymers forming inclusions as a second phase for improving mechanical properties. A polymer containing elastomeric (co)polymers as insertions of a second phase would by contrast be called heterophasic and is preferably not part of the present invention. The presence of second phases or the so-called inclusions are for instance visible by high-resolution microscopy, like electron microscopy or atomic force microscopy, or by dynamic mechanical thermal analysis (DMTA). Specifically in DMTA the presence of a multiphase structure can be identified by the presence of at least two distinct glass transition temperatures.

Accordingly it is preferred that the propylene copolymer (R-PP) has no glass transition temperature below -30, preferably below -25 °C, more preferably below -20 °C.

On the other hand, in one preferred embodiment the propylene copolymer (R-PP) has a glass transition temperature in the range of -12 to +2 °C, more preferably in the range of -10 to +2 °C.

The propylene copolymer (R-PP) has a melt flow rate $MFR_2$ (230 °C) measured according to ISO 1133 in the range of 1.0 to 16.0 g/10min, more preferably in the range of 1.0 to 12.0 g/10min, still more preferably in the range of 5.0 to 11.0 g/10min. In case the propylene copolymer (R-PP) shall be used in the cast film process the melt flow rate $MFR_2$ (230 °C) is preferably in the range of 6.0 to 16.0 g/10min, more preferably in the range of 7.0 to 11.0 g/10min. In turn, in case the propylene copolymer (R-PP) shall be used in the blown film process, like in the air cooled blown film process, the melt flow rate $MFR_2$ (230 °C) is preferably in the range of 1.0 to 4.0 g/10min, more preferably in the range of 1.5 to 3.5 g/10min.

The propylene copolymer (R-PP) comprises apart from propylene also comonomers. Preferably, the propylene copolymer (R-PP) comprises apart from propylene ethylene and/or $C_4$ to $C_{12}$ $\alpha$-olefins. Accordingly, the term "propylene copolymer" is preferably understood as a polypropylene comprising, preferably consisting of, units derivable from

(a) propylene
and
(b) ethylene and/or $C_4$ to $C_2$ $\alpha$-olefins.

Thus, the propylene copolymer (R-PP) preferably comprises monomers copolymerizable with propylene, for example comonomers such as ethylene and/or $C_4$ to $C_{12}$ $\alpha$-olefins, in particular ethylene and/or $C_4$ to $C_8$ $\alpha$-olefins, e.g. 1-butene and/or 1-hexene. Preferably the propylene copolymer (R-PP) comprises, especially consists of, monomers copolymerizable with propylene from the group consisting of ethylene, 1-butene and 1-hexene. More specifically the propylene copolymer (R-PP) comprises - apart from propylene - units derivable from ethylene and/or 1-butene. In a preferred embodiment, the propylene copolymer (R-PP) comprises units derivable from ethylene and propylene only.

Additionally it is appreciated that the propylene copolymer (R-PP) preferably has a comonomer content in a very specific range, which contributes to the impact strength and the good optical properties. Thus it is required that the comonomer content of the propylene copolymer (R-PP) is in the range of 2.5 to below 11.5 mol.-%, more preferably in the range of 3.5 to below 11.0 mol.-%, still more preferably in the range of 5.5 to 10.5 mol.-%, yet more preferably in the range of 6.5 to 10.0 mol.-%.

Further the propylene copolymer is featured by its relative content of isolated to block ethylene sequences (I(E)). The I(E) content [%] is defined by equation (I)

$$I(E) = \frac{fPEP}{(fEEE + fPEE + fPEP)} \times 100 \qquad (I)$$

wherein

I(E) is the relative content of isolated to block ethylene sequences [in %];
fPEP is the mol fraction of propylene/ethylene/propylene sequences (PEP) in the sample;
fPEE is the mol fraction of propylene/ethylene/ethylene sequences (PEE) and of ethylene/ethylene/propylene sequences (EEP) in the sample;
fEEE is the mol fraction of ethylene/ethylene/ethylene sequences (EEE) in the sample wherein all sequence concentrations being based on a statistical triad analysis of $^{13}$C-NMR data.

Accordingly it is preferred that the propylene copolymer (R-PP) has a I(E) content in the range 45.0 to 69.0 %, more preferably in the range of 50.0 to 68.0 %, still more preferably in the range of 52.0 to 67.0 %.

Further, the propylene copolymer (R-PP) has a melting temperature of at least 135 °C, more preferably in the range of 135 to 155 °C, still more preferably in the range of 138 to 150 °C, like in the range of 138 to 145 °C.

Further, it is preferred that the propylene copolymer (R-PP) has a crystallization temperature of at least 99 °C, more preferably in the range of 99 to 110 °C, still more preferably in the range of 100 to 108 °C, like in the range of 101 to 106 °C These values are especially applicable in case the propylene copolymer (R-PP) is not nucleated, e.g. $\alpha$-nucleated.

Preferably, the propylene copolymer (R-PP) has a xylene cold soluble fraction (XCS) in the range of 4.0 to 25.0 wt.-%, preferably in the range of 8.0 to 22.0 wt.-%, more preferably in the range of 10.0 to 21.0 wt-%.

Preferably, the propylene copolymer (R-PP) has a molecular weight distribution (Mw/Mn) of at least 2.0, more preferably in the range of 2.5 to 6.5, still more preferably in the range of 2.8 to 5.5.

Additionally or alternatively to the molecular weight distribution (Mw/Mn) as defined in the previous paragraph the propylene copolymer (R-PP) has preferably weight average molecular weight Mw in the range of 120 to 700 kg/mol, more preferably in the range of 150 to 600 kg/mol, like in the range of 180 to 500 kg/mol.

Preferably, the propylene copolymer has been produced in the presence of a Ziegler-Natta catalyst. The catalyst influences in particular the microstructure of the polymer. In particular, polypropylenes prepared by using a metallocene catalyst provide a different microstructure compared to polypropylenes prepared by using Ziegler-Natta (ZN) catalysts. The most significant difference is the presence of regio-defects in metallocene-made polypropylenes, which is not the case for polypropylenes made by Ziegler-Natta (ZN). The regio-defects can be of three different types, namely 2,1-erythro (2,1e), 2,1-threo (2,1t) and 3,1 defects. A detailed description of the structure and mechanism of formation of regio-defects in polypropylene can be found in Chemical Reviews 2000,100(4),pages 1316-1327.

The term "2,1 regio defects" as used in the present invention defines the sum of 2,1 erythro regio-defects and 2,1 threo regio-defects.

Accordingly it is preferred that the propylene copolymer (R-PP) has 2,1 regio-defects, like 2,1 erythro regio-defects, of at most 0.4 %, more preferably of at most 0.3 %, still more preferably of at most 0.2 %, determined by $^{13}$C-NMR spectroscopy. In one specific embodiment no 2,1 regio-defects, like 2,1 erythro regio-defects, are detectable for the propylene copolymer (R-PP).

The propylene copolymer (R-PP) preferably comprises at least two polymer fractions, like two or three polymer fraction, all of them being propylene copolymers. Preferably, the random propylene copolymer (R-PP) comprises at least two different propylene copolymer fractions, like two different propylene copolymer fractions, wherein further the two propylene copolymer fractions preferably differ in the comonomer content.

Preferably one fraction of the two polymer copolymer fractions of the propylene copolymer (R-PP) is the comonomer lean fraction and the other fraction is the comonomer rich fraction, wherein more preferably the lean fraction and the rich fraction fulfill together in-equation (II), more preferably in-equation (IIa), still more preferably in-equation (IIb),

$$\frac{Co\ (rich)}{Co\ (lean)} \geq 1.0 \ \text{(II)},$$

$$1.0 \leq \frac{Co\ (rich)}{Co\ (lean)} \leq 5.0 \ \ \text{(IIa)},$$

$$1.5 \leq \frac{Co\ (rich)}{Co\ (lean)} \leq 4.0 \ \ \text{(IIb)}$$

wherein

Co (lean)    is the comonomer content [mol.-%] of the propylene copolymer fraction with the lower comonomer content,
Co (rich)    is the comonomer content [mol.-%] of the propylene copolymer fraction with the higher comonomer content.

Thus in one embodiment the first random propylene copolymer fraction (R-PP1) has higher comonomer content than the second random propylene copolymer fraction (R-PP2).

In another embodiment, the first random propylene copolymer fraction (R-PP1) has lower comonomer content than the second random propylene copolymer fraction (R-PP2). This embodiment is preferred.

Accordingly it is preferred that the first random propylene copolymer fraction (R-PP1) and the second random propylene copolymer fraction (R-PP2) fulfill together the in-equation (III), more preferably in-equation (IIIa), still more preferably in-equation (IIIb),

$$\frac{Co\ (R-PP2)}{Co\ (R-PP1)} \geq 1.0 \ \ \ \ \ \ \text{(III)},$$

$$1.0 \leq \frac{Co\ (R-PP2)}{Co\ (R-PP1)} \leq 5.0 \ \ \ \ \ \ \text{(IIIa)},$$

$$1.5 \leq \frac{Co\ (R-PP2)}{Co\ (R-PP1)} \leq 4.0 \ \ \ \ \ \ \text{(IIIb)}$$

wherein

Co (R-PP1)     is the comonomer content [mol.-%] of the first propylene copolymer fraction (R-PP1),
Co (R-PP2)     is the comonomer content [mol.-%] of the second propylene copolymer fraction (R-PP2).

It is especially preferred that the propylene copolymer (R-PP) has higher comonomer content than the first random propylene copolymer fraction (R-PP1). Accordingly the random propylene copolymer (R-PP) comprises, preferably consists of, the first random propylene copolymer fraction (R-PP1) and the second random propylene copolymer fraction (R-PP2), wherein further the random propylene copolymer (R-PP) fulfills the in-equation (IV), more preferably in-equation (IVa), still more preferably in-equation (IVb),

$$\frac{Co\ (R-PP)}{Co\ (R-PP1)} \geq 1.0 \qquad (IV),$$

$$1.0 \leq \frac{Co\ (R-PP)}{Co\ (R-PP1)} \leq 4.0 \qquad (IVa),$$

$$1.0 \leq \frac{Co\ (R-PP)}{Co\ (R-PP1)} \leq 3.0 \qquad (IVb)$$

wherein

Co (R-PP1)     is the comonomer content [mol.-%] of the first random propylene copolymer fraction (R-PP1),
Co (R-PP)      is the comonomer content [mol.-%] of the propylene copolymer (R-PP).

Thus it is preferred that the first random propylene copolymer fraction (R-PP1) has a comonomer content of equal or below 7.0 mol-%, more preferably in the range 1.0 to 6.5 mol-%, yet more preferably in the range 2.0 to 6.2 mol-%, still more preferably in the range 3.5 to 6.0 mol-%.
On the other hand, the second random propylene copolymer fraction (R-PP2) preferably has a comonomer content in the range of more than 7.0 to 15.0 mol-%, still more preferably in the range 8.0 to 14.0 mol-%, yet more preferably in the range 9.0 to 13.0 mol-%.
Preferably, the first random propylene copolymer fraction (R-PP1) and the second random propylene copolymer fraction (R-PP2) have essentially the same melt flow rate $MFR_2$ (230 °C). Accordingly, reference is made to the melt flow rate provided for the propylene copolymer (R-PP).
The comonomers of the first propylene copolymer fraction (R-PP1) and random propylene copolymer fraction (R-PP2), respectively, copolymerizable with propylene are ethylene and/or $C_4$ to $C_{12}$ $\alpha$-olefins, in particular ethylene and/or $C_4$ to $C_8$ $\alpha$-olefins, e.g. 1-butene and/or 1-hexene. Preferably the first propylene copolymer fraction (R-PP1) and second propylene copolymer fraction (R-PP2), respectively, comprise, especially consist of, monomers copolymerizable with propylene from the group consisting of ethylene, 1 -butene and 1-hexene. More specifically the first propylene copolymer fraction (R-PP1) and second propylene copolymer fraction (R-PP2), respectively, comprise - apart from propylene - units derivable from ethylene and/or 1-butene. In a preferred embodiment the first propylene copolymer fraction (R-PP1) and the second propylene copolymer fraction (R-PP2) comprise the same comonomers, i.e. ethylene only.
Preferably the weight ratio between the first propylene copolymer fraction (R-PP1) and the second propylene copolymer fraction (R-PP2) is 20/80 to 80/20, more preferably 30/70 to 70/30, like 35/65 to 65/35.
The propylene copolymer (R-PP) may contain up to 5.0 wt.-% additives, like $\alpha$-nucleating agents and antioxidants, as well as slip agents and antiblocking agents. Preferably the additive content (without $\alpha$-nucleatingagents) is below 3.0 wt.-%, like below 1.0 wt.-%.
Preferably, the propylene copolymer (R-PP) comprises a $\alpha$-nucleatingagent. Even more preferred, the present invention is free of $\beta$-nucleating agents. The $\alpha$-nucleatingagent is preferably selected from the group consisting of

(i) salts of monocarboxylic acids and polycarboxylic acids, e.g. sodium benzoate or aluminum tert-butylbenzoate, and
(ii) dibenzylidenesorbitol (e.g. 1,3 : 2,4 dibenzylidenesorbitol) and $C_1$-$C_8$-alkylsubstituted dibenzylidenesorbitol derivatives, such as methyldibenzylidenesorbitol, ethyldibenzylidenesorbitol or dimethyldibenzylidenesorbitol (e.g. 1,3 : 2,4 di(methylbenzylidene) sorbitol), or substituted nonitol-derivatives, such as 1,2,3,-trideoxy-4,6:5,7-bis-O-[(4-propylphenyl)methylene]-nonitol, and
(iii) salts of diesters of phosphoric acid, e.g. sodium 2,2'-methylenebis (4, 6,-di-tert-butylphenyl) phosphate or aluminium-hydroxy-bis[2,2'-methylene-bis(4,6-di-t-butylphenyl)phosphate], and
(iv) vinylcycloalkane polymer and vinylalkane polymer, and
(v) mixtures thereof.

Such additives are generally commercially available and are described, for example, in "Plastic Additives Handbook", 5th edition, 2001 of Hans Zweifel.

Preferably, the propylene copolymer (R-PP) contains up to 2.0 wt.-% of the $\alpha$-nucleating agent. In a preferred embodiment, the the propylene copolymer (R-PP) contains not more than 3000 ppm, more preferably of 1 to 3000 ppm, more preferably of 5 to 2000 ppm of a $\alpha$-nucleating agent, in particular selected from the group consisting of dibenzylidenesorbitol (e.g. 1,3 : 2,4 dibenzylidene sorbitol), dibenzylidenesorbitol derivative, preferably dimethyldibenzylidenesorbitol (e.g. 1,3: 2,4 di(methylbenzylidene) sorbitol), or substituted nonitol-derivatives, such as 1,2,3,-trideoxy-4,6:5,7-bis-O-[(4-propylphenyl)methylene]-nonitol, vinylcycloalkane polymer, vinylalkane polymer, and mixtures thereof.

The present invention is directed to unoriented films. Accordingly in a further embodiment the present invention is directed to unoriented films, like cast films or blown films, e.g. air cooled blown films, comprising at least 70 wt.-%, preferably comprising at least 80 wt.-%, more preferably comprising at least 90 wt.-%, still more preferably comprising at least 95 wt.-%, yet more preferably comprising at least 99 wt.-%, of the instant propylene copolymer (R-PP).

One distinguishes between unoriented and oriented films (see for instance polypropylene handbook, Nello Pasquini, 2nd edition, Hanser). Oriented films are typically biaxially oriented films, whereas unoriented films are cast or blown films, e.g. air cooled blown films. Accordingly, an unoriented film is not drawn intensively in machine and transverse direction as done by oriented films. Thus, the unoriented film according to this invention is not a biaxially oriented film. Preferably, the unoriented film according to the instant invention is a cast film or blown film, the latter being preferred. In one specific embodiment, the unoriented film is an air-cooled blown film.

Preferably, the unoriented film has a thickness of 5 to 2,000 $\mu$m, preferably of 10 to 1,000 $\mu$m, more preferably of 20 to 700 $\mu$m, like of 40 to 500 $\mu$m.

The propylene copolymer (R-PP) is also used in the manufacture of unoriented films, like cast films or blown films, e.g. air cooled blown films.

In case unoriented film is produced by cast film technology the molten propylene copolymer (R-PP) is extruded through a slot extrusion die onto a chill roll to cool the polymer to a solid film. Typically, the propylene copolymer (R-PP) is firstly compressed and liquefied in an extruder, it being possible for any additives to be already added to the polymer or introduced at this stage via a masterbatch. The melt is then forced through a flat-film die (slot die), and the extruded film is taken off on one or more take-off rolls, during which it cools and solidifies. It has proven particularly favorable to keep the take-off roll or rolls, by means of which the extruded film is cooled and solidified, at a temperature from 10 to 50°C, preferably from 15 to 40°C.

In the blown film process, the propylene copolymer (R-PP) melt is extruded through an annular die and blown into a tubular film by forming a bubble which is collapsed between nip rollers after solidification. The blown extrusion can be preferably effected at a temperature in the range 160 to 240 °C, and cooled by water or preferably by blowing gas (generally air) at a temperature of 10 to 50 °C to provide a frost line height of 0.5 to 8 times the diameter of the die. The blow up ratio should generally be in the range of from 1.5 to 4, such as from 2 to 4, preferably 2.5 to 3.5.

The propylene copolymer (R-PP) is preferably produced in a sequential polymerization process in the presence of a Ziegler-Natta catalyst as defined below.

Accordingly it is preferred that the propylene copolymer (R-PP) is produced in the presence of

(a) a Ziegler-Natta catalyst (ZN-C) comprises a titanium compound (TC), a magnesium compound (MC) and an internal donor (ID), wherein said internal donor (ID) is a non-phtalic acid ester,
(b) optionally a co-catalyst (Co), and
(c) optionally an external donor (ED).

Preferably, the propylene copolymer (R-PP) is produced in a sequential polymerization process comprising at least two reactors (R1) and (R2), in the first reactor (R1) the first propylene copolymer fraction (R-PP1) is produced and subsequently transferred into the second reactor (R2), in the second reactor (R2) the second propylene copolymer fraction (R-PP2) is produced in the presence of the first propylene copolymer fraction (R-PP1).

The term "sequential polymerization system" indicates that the propylene copolymer (R-PP) is produced in at least two reactors connected in series. Accordingly, the present polymerization system comprises at least a first polymerization reactor (R1) and a second polymerization reactor (R2), and optionally a third polymerization reactor (R3). The term "polymerization reactor" shall indicate that the main polymerization takes place. Thus in case the process consists of two polymerization reactors, this definition does not exclude the option that the overall system comprises for instance a pre-polymerization step in a pre-polymerization reactor. The term "consist of" is only a closing formulation in view of the main polymerization reactors.

Preferably, at least one of the two polymerization reactors (R1) and (R2) is a gas phase reactor (GPR). Still more preferably, the second polymerization reactor (R2) and the optional third polymerization reactor (R3) are gas phase reactors (GPRs), i.e. a first gas phase reactor (GPR1) and a second gas phase reactor (GPR2). A gas phase reactor (GPR) according to this invention is preferably a fluidized bed reactor, a fast fluidized bed reactor or a settled bed reactor or any combination thereof.

Accordingly, the first polymerization reactor (R1) is preferably a slurry reactor (SR) and can be any continuous or simple stirred batch tank reactor or loop reactor operating in bulk or slurry. Bulk means a polymerization in a reaction medium that comprises of at least 60 % (w/w) monomer. According to the present invention, the slurry reactor (SR) is preferably a (bulk) loop reactor (LR). Accordingly the average concentration of propylene copolymer (R-PP), i.e. the first fraction ($1^{st}$ F) of the propylene copolymer (R-PP) (i.e. the first propylene copolymer fraction (R-PP1)), in the polymer slurry within the loop reactor (LR) is typically from 15 wt.-% to 55 wt.-%, based on the total weight of the polymer slurry within the loop reactor (LR). In one preferred embodiment of the present invention the average concentration of the first propylene copolymer fraction (R-PP1) in the polymer slurry within the loop reactor (LR) is from 20 wt.-% to 55 wt.-% and more preferably from 25 wt.-% to 52 wt.-%, based on the total weight of the polymer slurry within the loop reactor (LR).

Preferably, the propylene copolymer of the first polymerization reactor (R1), i.e. the first propylene copolymer fraction (R-PP1), more preferably the polymer slurry of the loop reactor (LR) containing the first propylene copolymer fraction (R-PP1), is directly fed into the second polymerization reactor (R2), i.e. into the (first) gas phase reactor (GPR1), without a flash step between the stages. This kind of direct feed is described in EP 887379 A, EP 887380 A, EP 887381 A and EP 991684 A. By "direct feed" is meant a process wherein the content of the first polymerization reactor (R1), i.e. of the loop reactor (LR), the polymer slurry comprising the the first propylene copolymer fraction (R-PP1), is led directly to the next stage gas phase reactor.

Alternatively, the propylene copolymer of the first polymerization reactor (R1), i.e. the first propylene copolymer fraction (R-PP1), more preferably polymer slurry of the loop reactor (LR) containing the first propylene copolymer fraction (R-PP1), may be also directed into a flash step or through a further concentration step before fed into the second polymerization reactor (R2), i.e. into the gas phase reactor (GPR). Accordingly, this "indirect feed" refers to a process wherein the content of the first polymerization reactor (R1), of the loop reactor (LR), i.e. the polymer slurry, is fed into the second polymerization reactor (R2), into the (first) gas phase reactor (GPR1), via a reaction medium separation unit and the reaction medium as a gas from the separation unit.

More specifically, the second polymerization reactor (R2), and any subsequent reactor, for instance the third polymerization reactor (R3), are preferably gas phase reactors (GPRs). Such gas phase reactors (GPR) can be any mechanically mixed or fluid bed reactors. Preferably, the gas phase reactors (GPRs) comprise a mechanically agitated fluid bed reactor with gas velocities of at least 0.2 m/sec. Thus, it is appreciated that the gas phase reactor is a fluidized bed type reactor preferably with a mechanical stirrer.

Thus, in a preferred embodiment, the first polymerization reactor (R1) is a slurry reactor (SR), like loop reactor (LR), whereas the second polymerization reactor (R2) and any optional subsequent reactor, like the third polymerization reactor (R3), are gas phase reactors (GPRs). Accordingly for the instant process at least two, preferably two polymerization reactors (R1) and (R2) or three polymerization reactors (R1), (R2) and (R3), namely a slurry reactor (SR), like loop reactor (LR) and a (first) gas phase reactor (GPR1) and optionally a second gas phase reactor (GPR2), connected in series are used. If needed prior to the slurry reactor (SR) a pre-polymerization reactor is placed.

The Ziegler-Natta catalyst (ZN-C) is fed into the first polymerization reactor (R1) and is transferred with the polymer (slurry) obtained in the first polymerization reactor (R1) into the subsequent reactors. If the process covers also a pre-polymerization step it is preferred that all of the Ziegler-Natta catalyst (ZN-C) is fed in the pre-polymerization reactor. Subsequently the pre-polymerization product containing the Ziegler-Natta catalyst (ZN-C) is transferred into the first polymerization reactor (R1).

A preferred multistage process is a "loop-gas phase"-process, such as developed by Borealis A/S, Denmark (known as BORSTAR® technology) described e.g. in patent literature, such as in EP 0 887 379, WO 92/12182 WO 2004/000899, WO 2004/111095, WO 99/24478, WO 99/24479 or in WO 00/68315.

A further suitable slurry-gas phase process is the Spheripol® process of Basell.

Especially good results are achieved in case the temperature in the reactors is carefully chosen.

Accordingly it is preferred that the operating temperature in the first polymerization reactor (R1) is in the range of 62 to 85 °C, more preferably in the range of 65 to 82 °C, still more preferably in the range of 67 to 80 °C.

Alternatively or additionally to the previous paragraph it is preferred that the operating temperature in the second polymerization reactor (R2) and optional in the third reactor (R3) is in the range of 75 to 95 °C, more preferably in the range of 78 to 92 °C.

Preferably, the operating temperature in the second polymerization reactor (R2) is equal or higher to the operating temperature in the first polymerization reactor (R1). Accordingly it is preferred that the operating temperature

(a) in the first polymerization reactor (R1) is in the range of 62 to 85 °C, more preferably in the range of 65 to 82 °C, still more preferably in the range of 67 to 80 °C,

and

(b) in the second polymerization reactor (R2) is in the range of 75 to 95 °C, more preferably in the range of 78 to 92 °C, still more preferably in the range of 78 to 88 °C,

with the proviso that the operating temperature in the in the second polymerization reactor (R2) is equal or higher to the operating temperature in the first polymerization reactor R1).

Still more preferably, the operating temperature of the third polymerization reactor (R3) - if present - is higher than the operating temperature in the first polymerization reactor (R1). In one specific embodiment the operating temperature of the third polymerization reactor (R3) - if present - is higher than the operating temperature in the first polymerization reactor (R1) and in the second polymerization reactor (R2). Accordingly it is preferred that the operating temperature

(a) in the first polymerization reactor (R1) is in the range of 62 to 85 °C, more preferably in the range of 65 to 82 °C, still more preferably in the range of 67 to 80 °C,

(b) in the second polymerization reactor (R2) is in the range of 75 to 95 °C, more preferably in the range of 78 to 92 °C, still more preferably in the range of 78 to 88 °C, and

(c) in the third polymerization reactor (R3) - if present - is in the range of 75 to 95 °C, more preferably in the range of 78 to 92 °C, still more preferably in the range of 85 to 92 °C, like in the range of 87 to 92 °C,

with the proviso that the operating temperature in the in the second polymerization reactor (R2) is equal or higher to the operating temperature in the first polymerization reactor (R1) and

with the proviso that the third polymerization reactor (R3) is higher than the operating temperature in the first polymerization reactor (R1), preferably is higher than the operating temperature in the first polymerization reactor (R1) and in the second polymerization reactor (R2).

Typically the pressure in the first polymerization reactor (R1), preferably in the loop reactor (LR), is in the range of from 20 to 80 bar, preferably 30 to 70 bar, like 35 to 65 bar, whereas the pressure in the second polymerization reactor (R2), i.e. in the (first) gas phase reactor (GPR1), and optionally in any subsequent reactor, like in the third polymerization reactor (R3), e.g. in the second gas phase reactor (GPR2), is in the range of from 5 to 50 bar, preferably 15 to 40 bar.

Preferably hydrogen is added in each polymerization reactor in order to control the molecular weight, i.e. the melt flow rate $MFR_2$.

Preferably, the average residence time is rather long in the polymerization reactors (R1) and (R2). In general, the average residence time ($\tau$) is defined as the ratio of the reaction volume ($V_R$) to the volumetric outflow rate from the reactor ($Q_o$) (i.e. $V_R/Q_o$), i.e $\tau = V_R/Q_o$ [tau = $V_R/Q_o$]. In case of a loop reactor the reaction volume ($V_R$) equals to the reactor volume.

Accordingly the average residence time ($\tau$) in the first polymerization reactor (R1) is preferably at least 20 min, more preferably in the range of 20 to 45 min, still more preferably in the range of 25 to 42 min, like in the range of 28 to 40 min, and/or the average residence time ($\tau$) in the second polymerization reactor (R2) is preferably at least 90 min, more preferably in the range of 90 to 220 min, still more preferably in the range of 100 to 210 min, yet more preferably in the range of 105 to 200 min, like in the range of 105 to 190 min. Preferably the average residence time ($\tau$) in the third polymerization reactor (R3) - if present - is preferably at least 30 min, more preferably in the range of 30 to 90 min, still more preferably in the range of 40 to 80 min, like in the range of 50 to 80 min.

Further it is preferred that the average residence time ($\tau$) in the total sequential polymerization system, more preferably that the average residence time ($\tau$) in the first (R1) second polymerization reactors (R2) and optional third polymerization reactor (R3) together, is at least 140 min, more preferably at least 150 min, still more preferably in the range of 140 to 240 min, more preferably in the range of 150 to 220 min, still more preferably in the range of 155 to 220 min.

As mentioned above the instant process can comprises in addition to the (main) polymerization of the propylene copolymer (R-PP) in the at least two polymerization reactors (R1, R3 and optional R3) prior thereto a pre-polymerization in a pre-polymerization reactor (PR) upstream to the first polymerization reactor (R1).

In the pre-polymerization reactor (PR) a polypropylene (Pre-PP) is produced. The pre-polymerization is conducted in the presence of the Ziegler-Natta catalyst (ZN-C). According to this embodiment the Ziegler-Natta catalyst (ZN-C), the co-catalyst (Co), and the external donor (ED) are all introduced to the pre-polymerization step. However, this shall not exclude the option that at a later stage for instance further co-catalyst (Co) and/or external donor (ED) is added in the polymerization process, for instance in the first reactor (R1). In one embodiment the Ziegler-Natta catalyst (ZN-C), the co-catalyst (Co), and the external donor (ED) are only added in the pre-polymerization reactor (PR), if a pre-polymerization is applied.

The pre-polymerization reaction is typically conducted at a temperature of 0 to 60 °C, preferably from 15 to 50 °C, and more preferably from 20 to 45 °C.

The pressure in the pre-polymerization reactor is not critical but must be sufficiently high to maintain the reaction mixture in liquid phase. Thus, the pressure may be from 20 to 100 bar, for example 30 to 70 bar.

In a preferred embodiment, the pre-polymerization is conducted as bulk slurry polymerization in liquid propylene, i.e. the liquid phase mainly comprises propylene, with optionally inert components dissolved therein. Furthermore, according to the present invention, an ethylene feed is employed during pre-polymerization as mentioned above.

It is possible to add other components also to the pre-polymerization stage. Thus, hydrogen may be added into the pre-polymerization stage to control the molecular weight of the polypropylene (Pre-PP) as is known in the art. Further, antistatic additive may be used to prevent the particles from adhering to each other or to the walls of the reactor.

The precise control of the pre-polymerization conditions and reaction parameters is within the skill of the art.

Due to the above defined process conditions in the pre-polymerization, preferably a mixture (MI) of the Ziegler-Natta catalyst (ZN-C) and the polypropylene (Pre-PP) produced in the pre-polymerization reactor (PR) is obtained. Preferably, the Ziegler-Natta catalyst (ZN-C) is (finely) dispersed in the polypropylene (Pre-PP). In other words, the Ziegler-Natta catalyst (ZN-C) particles introduced in the pre-polymerization reactor (PR) split into smaller fragments, which are evenly distributed within the growing polypropylene (Pre-PP). The sizes of the introduced Ziegler-Natta catalyst (ZN-C) particles as well as of the obtained fragments are not of essential relevance for the instant invention and within the skilled knowledge.

As mentioned above, if a pre-polymerization is used, subsequent to said pre-polymerization, the mixture (MI) of the Ziegler-Natta catalyst (ZN-C) and the polypropylene (Pre-PP) produced in the pre-polymerization reactor (PR) is transferred to the first reactor (R1). Typically the total amount of the polypropylene (Pre-PP) in the final propylene copolymer (R-PP) is rather low and typically not more than 5.0 wt.-%, more preferably not more than 4.0 wt.-%, still more preferably in the range of 0.5 to 4.0 wt.-%, like in the range 1.0 of to 3.0 wt.-%.

In case that pre-polymerization is not used propylene and the other ingredients such as the Ziegler-Natta catalyst (ZN-C) are directly introduced into the first polymerization reactor (R1).

Accordingly, the process according the instant invention comprises the following steps under the conditions set out above

(a) in the first polymerization reactor (R1), i.e. in a loop reactor (LR), propylene and a comonomer being ethylene and/or a $C_4$ to $C_{12}$ $\alpha$-olefin, preferably propylene and ethylene, are polymerized obtaining a first propylene copolymer fraction (R-PP1) of the propylene copolymer (R-PP),

(b) transferring said first propylene copolymer fraction (R-PP1) to a second polymerization reactor (R2),

(c) in the second polymerization reactor (R2) propylene and a comonomer being ethylene and/or a $C_4$ to $C_{12}$ $\alpha$-olefin, preferably propylene and ethylene, are polymerized in the presence of the first propylene copolymer fraction (R-PP1) obtaining a second propylene copolymer fraction (R-PP2) of the propylene copolymer (R-PP), said first propylene copolymer fraction (R-PP1) and said second propylene copolymer fraction (R-PP2) form the propylene copolymer (R-PP).

A pre-polymerization as described above can be accomplished prior to step (a).

The Ziegler-Natta Catalyst (ZN-C), the external donor (ED) and the co-catalyst (Co)

As pointed out above in the specific process for the preparation of the propylene copolymer (R-PP) as defined above a Ziegler-Natta catalyst (ZN-C) must be used. Accordingly, the Ziegler-Natta catalyst (ZN-C) will be now described in more detail.

The catalyst used in the present invention is a solid Ziegler-Natta catalyst (ZN-C), whichcomprises a titanium compound (TC), a magnesium compound (MC) and an internal donor (ID), wherein said internal donor (ID) is a non-phthalic acid ester, most preferably diester of non-phthalic dicarboxylic acids as described in more detail below. Thus, the catalyst used in the present invention is fully free of undesired phthalic compounds.

The Ziegler-Natta catalyst (ZN-C) can be further defined by the way as obtained. Accordingly, the Ziegler-Natta catalyst (ZN-C) is preferably obtained by a process comprising the steps of

a) providing a solution of at least one complex (A) being a complex of a magnesium compound (MC) and an alcohol comprising in addition to the hydroxyl moiety at least one further oxygen bearing moiety (A1) being different to a hydroxyl group, and optionally at least one complex (B) being a complex of said magnesium compound (MC) and an alcohol not comprising any other oxygen bearing moiety (Bl),

b) combining said solution with a titanium compound (TC) and producing an emulsion the dispersed phase of which contains more than 50 mol.-% of the magnesium;

c) agitating the emulsion in order to maintain the droplets of said dispersed phase preferably within an average size range of 5 to 200μm;

d) solidifying said droplets of the dispersed phase;

e) recovering the solidified particles of the olefin polymerisation catalyst component, and wherein an internal donor (ID) is added at any step prior to step c) and said internal donor (ID) is non-phthalic acid ester, preferably said internal donor (ID) is a diester of non-phthalic dicarboxylic acids as described in more detail below.

Detailed description as to how such a Ziegler-Natta catalyst (ZN-C) can be obtained is disclosed in WO 2012/007430.

In a preferred embodiment in step a) the solution of complex of magnesium compound (MC) is a mixture of complexes of magnesium compound (MC) (complexes (A) and (B)).

The complexes of magnesium compound (MC) (complexes (A) and (B)) can be prepared *in situ in* the first step of the catalyst preparation process by reacting said magnesium compound (MC) with the alcohol(s) as described above and in more detail below, or said complexes can be separately prepared complexes, or they can be even commercially available as ready complexes and used as such in the catalyst preparation process of the invention. In case the mixture of complexes of magnesium compound (MC) (complexes (A) and (B)) are prepared *in situ* in the first step of the catalyst preparation process they are preferably prepared by reacting said magnesium compound (MC) with the mixture of alcohols (A1) and (B1).

Preferably, the alcohol (A1) comprising in addition to the hydroxyl moiety at least one further oxygen bearing group different to a hydroxyl group to be employed in accordance with the present invention is an alcohol bearing an ether group.

Illustrative examples of such preferred alcohols (A1) comprising in addition to the hydroxyl moiety at least one further oxygen bearing group to be employed in accordance with the present invention areglycol monoethers, in particular $C_2$ to $C_4$ glycol monoethers, such as ethylene or propylene glycol monoethers wherein the ether moieties comprise from 2 to 18 carbon atoms, preferably from 4 to 12 carbon atoms. Preferred monoethers are $C_2$ to $C_4$ glycol monoethers and derivatives thereof. Illustrative and preferred examples are 2-(2-ethylhexyloxy)ethanol, 2-butyloxy ethanol, 2-hexyloxy ethanol and 1,3-propylene-glycol-monobutyl ether, 3-butoxy-2-propanol, with 2-(2-ethylhexyloxy)ethanol and 1,3-propyleneglycol-monobutyl ether, 3-butoxy-2-propanol being particularly preferred.

In case a mixture of complexes (A) and (B) (or alcohols (A1) and (B1) respectively) are used, the different complexes or alcohols are usually employed in a mole ratio of A:B, or A1:B1 from 1.0:10 to 1.0:0.5, preferably this mole ratio is from 1.0:8.0 to 1.0:1.0, more preferably 1.0:6.0 to 1.0:2.0, even more preferably 1.0:5.0 to 1.0:3.0. As indicated in the ratios above it is more preferred that the amount of alcohol A1, preferably alcohol with ether moiety, is higher that alcohol B1, i.e. alcohol without any other oxygen bearing moiety different to hydroxyl.

The internal donor (ID) used in the preparation of the Ziegler-Natta catalyst (ZN-C) is preferably selected from (di)esters of non-phthalic carboxylic (di)acids and derivatives and mixtures thereof. The ester moieties, i.e. the moieties derived from an alcohol (i.e. the alkoxy group of the ester), may be identical or different, preferably these ester moieties are identical. Typically, the ester moieties are aliphatic or aromatic hydrocarbon groups. Preferred examples thereof are linear or branched aliphatic groups having from 1 to 20 carbon atoms, preferably 2 to 16 carbon atoms, more preferably from 2 to 12 carbon atoms, or aromatic groups having 6 to 12 carbon atoms, optionally containing heteroatoms of Groups 14 to 17 of the Periodic Table of IUPAC, especially N, O, S and/or P. The acid moiety of the di- or monoacid(di)ester, preferably of the diester of diacid, preferably comprises 1 to 30 carbon atoms, more preferably, 2 to 20 carbon atoms, still more preferably 2 to 16 carbon atoms, optionally being substituted by aromatic or saturated or non-saturated cyclic or aliphatic hydrocarbyls having 1 to 20 C, preferably 1 to 10 carbon atoms and optionally containing heteroatoms of Groups 14 to 17 of the Periodic Table of IUPAC, especially N, O, S and/or P. Especially preferred esters are diesters of mono-unsaturated dicarboxylic acids.

In particular preferred esters are esters belonging to a group comprising malonates, maleates, succinates, glutarates, cyclohexene-1,2-dicarboxylates and benzoates, optionally being substituted as defined below, and any derivatives and/or mixtures thereof. Preferred examples are e.g. substituted maleates and citraconates, most preferably citraconates.

The internal donor (ID) or precursor thereof as defined further below is added preferably in step a) to said solution.

Esters used as internal donors (ID) can be prepared as is well known in the art. As example, dicarboxylic acid diesters can be formed by simply reacting of a carboxylic diacid anhydride with a $C_1$-$C_{20}$ alkanol and/or diol.

The titanium compound (TC) is preferably a titanium halide, like $TiCl_4$.

The complexes of magnesium compounds can be alkoxy magnesium complexes, preferably selected from the group consisting of magnesium dialkoxides, and complexes of a magnesium dihalide and a magnesium dialkoxide. It may be a reaction product of an alcohol and a magnesium compound selected from the group consisting of dialkyl magnesiums, alkyl magnesium alkoxides and alkyl magnesium halides, preferably dialkyl magnesium. It can further be selected from the group consisting of dialkyloxy magnesiums, diaryloxy magnesiums, alkyloxy magnesium halides, aryloxy magnesium halides, alkyl magnesium alkoxides, aryl magnesium alkoxides and alkyl magnesium aryloxides.

The magnesium dialkoxide may be the reaction product of a dialkyl magnesium of the formula $R_2Mg$, wherein each one of the two Rs is a similar or different $C_1$-$C_{20}$ alkyl, preferably a similar or different $C_2$-$C_{10}$ alkyl with alcohols as defined in the present application. Typical magnesium alkyls are ethylbutyl magnesium, dibutyl magnesium, dipropyl magnesium, propylbutyl magnesium, dipentyl magnesium, butylpentyl magnesium, butyloctyl magnesium and dioctyl magnesium. Most preferably, one R of the formula $R_2Mg$ is a butyl group and the other R is an octyl or ethyl group, i.e. the dialkyl magnesium compound is butyl octyl magnesium or butyl ethyl magnesium.

Typical alkyl-alkoxy magnesium compounds RMgOR, when used, are ethyl magnesium butoxide, butyl magnesium pentoxide, octyl magnesium butoxide and octyl magnesium octoxide.

Dialkyl magnesium or alkyl magnesium alkoxide can react, in addition to the alcohol containing in addition to the hydroxyl group at least one further oxygen bearing moiety being different to a hydroxyl moiety, which is defined above in this application, with a monohydric alcohol R'OH, or a mixture thereof with a polyhydric alcohol $R'(OH)_m$

Preferred monohydric alcohols are alcohols of the formula $R^b(OH)$, wherein $R^b$ is a $C_1$-$C_{20}$, preferably a $C_4$-$C_{12}$, and most preferably a $C_6$-$C_{10}$, straight-chain or branched alkyl residue or a $C_6$-$C_{12}$ aryl residue. Preferred monohydric alcohols include methanol, ethanol, n-propanol, iso-propanol, n-butanol, iso-butanol, sec-butanol, tert-butanol, n-amyl alcohol, iso-amyl alcohol, sec-amyl alcohol, tert-amyl alcohol, diethyl carbinol, sec-isoamyl alcohol, tert-butyl carbinol, 1-hexanol, 2-ethyl-1-butanol, 4-methyl-2-pentanol, 1-heptanol, 2-heptanol, 4-heptanol, 2,4-dimethyl-3-pentanol, 1-octanol, 2-octanol, 2-ethyl-1-hexanol, 1-nonanol, 5-nonanol, diisobutyl carbinol, 1-decanol and 2,7-dimethyl-2-octanol, 1-undecanol, 1-dodecanol, 1-tridecanol, 1-tetradecanol, 1-pentadecanol, 1-hexadecanol, 1-heptadecanol 1-octadecanol and phenol or benzyl alcohol. The aliphatic monohydric alcohols may optionally be unsaturated, as long as they do not act as catalyst poisons. The most preferred monohydric alcohol is 2-ethyl-1-hexanol.

Preferred polyhydric alcohols are alcohols of the formula $R^a(OH)_m$, wherein $R^a$ is a straight-chain, cyclic or branched $C_2$ to $C_6$ hydrocarbon residue, (OH) denotes hydroxyl moieties of the hydrocarbon residue and m is an integer of 2 to 6, preferably 3 to 5. Especially preferred polyhydric alcohols include ethylene glycol, propylene glycol, trimethylene glycol, 1,2-butylene glycol, 1,3-butylene glycol, 1,4-butylene glycol, 2,3-butylene glycol, 1,5pentanediol, 1,6-hexanediol, 1,8-octanediol, pinacol, diethylene glycol, triethylene glycol, 1,2-catechol, 1,3-catechol and 1,4-catechol, and triols such as glycerol and pentaerythritol.

The solvents to be employed for the preparation of the Ziegler-Natta catalyst (ZN-C) may be selected among aromatic and aliphatic solvents or mixtures thereof. Preferably the solvents are aromatic and/or aliphatic hydrocarbons with 5 to 20 carbon atoms, preferably 5 to 16, more preferably 5 to 12 carbon atoms, examples of which include benzene, toluene, cumene, xylol and the like, with toluene being preferred, as well as pentane, hexane, heptane, octane and nonane including straight chain, branched and cyclic compounds, and the like, with hexanes and heptanes being particular preferred.

Mg compound (MC) is typically provided as a 10 to 50 wt-% solution in a solvent as indicated above. Typical commercially available MC solutions are 20 - 40 wt-% solutions in toluene or heptanes.

The reaction for the preparation of the complex of magnesium compound (MC) may be carried out at a temperature of 40° to 70°C.

In step b) the solution of step a) is typically added to the titanium compound (TC), such as titanium tetrachloride. This addition preferably is carried out at a low temperature, such as from -10 to 40°C, preferably from -5 to 20°C, such as about -5°C to 15 °C.

The temperature for steps b) and c), is typically -10 to 50°C, preferably from -5 to 30°C, , while solidification typically requires heating as described in detail further below.

The emulsion, i.e. the two phase liquid-liquid system may be formed in all embodiments of the present invention by simple stirring and optionally adding (further) solvent(s) and additives, such as the turbulence minimizing agent (TMA) and/or the emulsifying agents described further below.

Preparation of the Ziegler-Natta catalyst (ZN-C) used in the present invention is based on a liquid/liquid two-phase system where no separate external carrier materials such as silica or $MgCl_2$ are needed in order to get solid catalyst particles.

The present Ziegler-Natta catalyst (ZN-C) particles are spherical and they have preferably a mean particle size from 5 to 500 $\mu$m, such as from 5 to 300 $\mu$m and in embodiments from 5 to 200 $\mu$m, or even from 10 to 100 $\mu$m. These ranges also apply for the droplets of the dispersed phase of the emulsion as described herein, taking into consideration that the droplet size can change (decrease) during the solidification step.

The process of the preparation of the Ziegler-Natta catalyst (ZN-C) as intermediate stage, yields to an emulsion of a denser, titanium compound (TC)/toluene-insoluble, oil dispersed phase typically having a titanium compound (TC)/magnesium mol ratio of 0.1 to 10 and an oil disperse phase having a titanium compound (TC)/magnesium mol ratio of 10 to 100. The titanium compound (TC) is preferably $TiCl_4$. This emulsion is then typically agitated, optionally in the presence of an emulsion stabilizer and/or a turbulence-minimizing agent, in order to maintain the droplets of said dispersed phase, typically within an average size range of 5 to 200 $\mu$m. The catalyst particles are obtained after solidifying said particles of the dispersed phase e.g. by heating.

In effect, therefore, virtually the entirety of the reaction product of the Mg complex with the titanium compound (TC) - which is the precursor of the ultimate catalyst component - becomes the dispersed phase, and proceeds through the further processing steps to the final particulate form. The disperse phase, still containing a useful quantity of titanium compound (TC), can be reprocessed for recovery of that metal.

Furthermore, emulsifying agents/emulsion stabilizers can be used additionally in a manner known in the art for facilitating the formation and/or stability of the emulsion. For the said purposes e.g. surfactants, e.g. a class based on acrylic or methacrylic polymers can be used. Preferably, said emulsion stabilizers are acrylic or methacrylic polymers, in particular those with medium sized ester side chains having more than 10, preferably more than 12 carbon atoms and preferably less than 30, and preferably 12 to 20 carbon atoms in the ester side chain. Particular preferred are unbranched $C_{12}$ to $C_{20}$ (meth)acrylates such as poly(hexadecyl)-methacrylate and poly(octadecyl)-methacrylate.

Furthermore, in some embodiments a turbulence-minimizing agent (TMA) can be added to the reaction mixture in order to improve the emulsion formation and maintain the emulsion structure. Said TMA agent has to be inert and soluble in the reaction mixture under the reaction conditions, which means that polymers without polar groups are preferred, like polymers having linear or branched aliphatic carbon backbone chains. Said TMA is in particular preferably selected from α-olefm polymers of α-olefin monomers with 6 to 20 carbon atoms, like polyoctene, polynonene, polydecene, polyundecene or polydodecene or mixtures thereof. Most preferable it is polydecene.

TMA can be added to the emulsion in an amount of e.g. 1 to 1.000 ppm, preferably 5 to 100 ppm and more preferable 5 to 50 ppm, based on the total weight of the reaction mixture.

It has been found that the best results are obtained when the titanium compound (TC)/Mg mol ratio of the dispersed phase (denser oil) is 1 to 5, preferably 2 to 4, and that of the disperse phase oil is 55 to 65. Generally, the ratio of the mol ratio titanium compound (TC)/Mg in the disperse phase oil to that in the denser oil is at least 10.

Solidification of the dispersed phase droplets by heating is suitably carried out at a temperature of 70 to150°C, usually at 80 to 110°C, preferably at 90 to 110°C. The heating may be done faster or slower. As especial slow heating is understood here heating with a heating rate of about 5°C/min or less, and especial fast heating e.g. 10°C/min or more. Often slower heating rates are preferable for obtaining good morphology of the catalyst component.

The solidified particulate product may be washed at least once, preferably at least twice, most preferably at least three times with a hydrocarbon, which preferably is selected from aromatic and aliphatic hydrocarbons, preferably with toluene, heptane or pentane. Washings can be done with hot (e.g. 90°C) or cold (room temperature) hydrocarbons or combinations thereof. Finally, the washed Ziegler-Natta catalyst (ZN-C) is recovered. It can further be dried, as by evaporation or flushing with nitrogen, or it can be slurried to an oily liquid without any drying step.

The finally obtained Ziegler-Natta catalyst (ZN-C) is desirably in the form of particles having generally an average size range of 5 to 200 μm, preferably 10 to 100, even an average size range of 20 to 60 μm is possible.

The Ziegler-Natta catalyst (ZN-C) is preferably used in association with an alkyl aluminum cocatalyst and optionally external donors.

As further component in the instant polymerization process, an external donor (ED) is preferably present. Suitable external donors (ED) include certain silanes, ethers, esters, amines, ketones, heterocyclic compounds and blends of these. It is especially preferred to use a silane. It is most preferred to use silanes of the general formula

$$R^a{}_pR^b{}_qSi(OR^c)(_{4-p-q})$$

wherein $R^a$, $R^b$ and $R^c$ denote a hydrocarbon radical, in particular an alkyl or cycloalkyl group, and wherein p and q are numbers ranging from 0 to 3 with their sum p + q being equal to or less than 3. $R^a$, $R^b$ and $R^c$ can be chosen independently from one another and can be the same or different. Specific examples of such silanes are (tert-butyl)$_2$Si(OCH$_3$)$_2$, (cyclohexyl)(methyl)Si(OCH$_3$)$^2$, (phenyl)$_2$Si(OCH$_3$)$_2$ and (cyclopentyl)$_2$Si(OCH$_3$)$_2$, or of general formula

$$Si(OCH_2CH_3)_3(NR^3R^4)$$

wherein $R^3$ and $R^4$ can be the same or different a represent a hydrocarbon group having 1 to 12 carbon atoms.

$R^3$ and $R^4$ are independently selected from the group consisting of linear aliphatic hydrocarbon group having 1 to 12 carbon atoms, branched aliphatic hydrocarbon group having 1 to 12 carbon atoms and cyclic aliphatic hydrocarbon group having 1 to 12 carbon atoms. It is in particular preferred that $R^3$ and $R^4$ are independently selected from the group consisting of methyl, ethyl, n-propyl, n-butyl, octyl, decanyl, iso-propyl, iso-butyl, isopentyl, tert.-butyl, tert.-amyl, neopentyl, cyclopentyl, cyclohexyl, methylcyclopentyl and cycloheptyl.

More preferably, both $R^1$ and $R^2$ are the same, yet more preferably, both $R^3$ and $R^4$ are an ethyl group.

In addition to the Ziegler-Natta catalyst (ZN-C) and the optional external donor (ED) a co-catalyst can be used. The co-catalyst is preferably a compound of group 13 of the periodic table (IUPAC), e.g. organo aluminum, such as an aluminum compound, like aluminum alkyl, aluminum halide or aluminum alkyl halide compound. Accordingly, in one specific embodiment the co-catalyst (Co) is a trialkylaluminium, like triethylaluminium (TEAL), dialkyl aluminium chloride or alkyl aluminium dichloride or mixtures thereof. In one specific embodiment the co-catalyst (Co) is triethylaluminium (TEAL).

Advantageously, the triethyl aluminium (TEAL) has a hydride content, expressed as $AlH_3$, of less than 1.0 wt% with respect to the triethyl aluminium (TEAL). More preferably, the hydride content is less than 0.5 wt%, and most preferably the hydride content is less than 0.1 wt%.

Preferably, the ratio between the co-catalyst (Co) and the external donor (ED) [Co/ED] and/or the ratio between the co-catalyst (Co) and the transition metal (TM) [Co/TM] should be carefully chosen.

Accordingly

(a) the mol-ratio of co-catalyst (Co) to external donor (ED) [Co/ED] must be in the range of 5 to 45, preferably is in the range of 5 to 35, more preferably is in the range of 5 to 25, still more preferably is in the range of 8 to 20; and optionally

(b) the mol-ratio of co-catalyst (Co) to titanium compound (TC) [Co/TC] must be in the range of above 40 to 500, preferably is in the range of 50 to 300, still more preferably is in the range of 60 to 150.

In the following, the present invention is further illustrated by means of examples.

EXAMPLES

1. **Measuring methods**

The following definitions of terms and determination methods apply for the above general description of the invention as well as to the below examples unless otherwise defined. **Calculation** of comonomer content of the second propylene copolymer fraction (R-PP2):

$$\frac{C(PP) - w(PP1)x\, C(PP1)}{w(PP2)} = C(PP2) \quad (I)$$

wherein

w(PP1)     is the weight fraction [in wt.-%] of the first propylene copolymer fraction (R-PP1),
w(PP2)     is the weight fraction [in wt.-%] of second propylene copolymer fraction (R-PP2),
C(PP1)     is the comonomer content [in mol-%] of the first random propylene copolymer fraction (R-PP1),
C(PP)      is the comonomer content [in mol-%] of the random propylene copolymer (R-PP),
C(PP2)     is the calculated comonomer content [in mol-%] of the second random propylene copolymer fraction (R-PP2).

$MFR_2$ (230 °C) is measured according to ISO 1133 (230 °C, 2.16 kg load).

**Quantification of microstructure** by NMR **spectroscopy**

Quantitative nuclear-magnetic resonance (NMR) spectroscopy was used to quantify the comonomer content and comonomer sequence distribution of the polymers. Quantitative $^{13}C\{^1H\}$ NMR spectra were recorded in the solution-state using a Bruker Advance III 400 NMR spectrometer operating at 400.15 and 100.62 MHz for $^1H$ and $^{13}C$ respectively. All spectra were recorded using a $^{13}C$ optimised 10 mm extended temperature probehead at 125°C using nitrogen gas for all pneumatics. Approximately 200 mg of material was dissolved in 3 ml of *1,2-tetrachloroethane-$d_2$* (TCE-$d_2$) along with chromium-(III)-acetylacetonate (Cr(acac)$_3$) resulting in a 65 mM solution of relaxation agent in solvent (Singh, G., Kothari, A., Gupta, V., Polymer Testing 28 5 (2009), 475). To ensure a homogenous solution, after initial sample preparation in a heat block, the NMR tube was further heated in a rotatary oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimised tip angle, 1 s recycle delay and a bi-level WALTZ16 decoupling scheme (Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 1128). A total of 6144 (6k) transients were acquired per spectra. Quantitative $^{13}C\{^1H\}$ NMR spectra were processed, integrated and relevant quantitative properties determined from the integrals using proprietary computer programs. All chemical shifts were indirectly referenced to the central methylene group of the ethylene block (EEE) at 30.00 ppm using the chemical shift of the solvent. This approach allowed comparable referencing even when this structural unit was not present. Characteristic signals corresponding to the incorporation of ethylene were observed Cheng, H. N., Macromolecules 17 (1984), 1950).

With characteristic signals corresponding to 2,1 erythro regio defects observed (as described in L. Resconi, L. Cavallo, A. Fait, F. Piemontesi, Chem. Rev. 2000, 100 (4), 1253, in Cheng, H. N., Macromolecules 1984, 17, 1950, and in W-J. Wang and S. Zhu, Macromolecules 2000, 33 1157) the correction for the influence of the regio defects on determined properties was required. Characteristic signals corresponding to other types of regio defects were not observed.

The comonomer fraction was quantified using the method of Wang et. al. (Wang, W-J., Zhu, S., Macromolecules 33 (2000), 1157) through integration of multiple signals across the whole spectral region in the $^{13}C\{^1H\}$ spectra. This method was chosen for its robust nature and ability to account for the presence of regio-defects when needed. Integral regions were slightly adjusted to increase applicability across the whole range of encountered comonomer contents.

For systems where only isolated ethylene in PPEPP sequences was observed the method of Wang et. al. was modified to reduce the influence of non-zero integrals of sites that are known to not be present. This approach reduced the overestimation of ethylene content for such systems and was achieved by reduction of the number of sites used to determine the absolute ethylene content to:

$$E = 0.5(S\beta\beta + S\beta\gamma + S\beta\delta + 0.5(S\alpha\beta + S\alpha\gamma))$$

Through the use of this set of sites the corresponding integral equation becomes:

$$E = 0.5(I_H + I_G + 0.5(I_C + I_D))$$

using the same notation used in the article of Wang et. al. (Wang, W-J., Zhu, S., Macromolecules 33 (2000), 1157). Equations used for absolute propylene content were not modified.

The mole percent comonomer incorporation was calculated from the mole fraction:

$$E \ [mol\%] = 100 * fE$$

The weight percent comonomer incorporation was calculated from the mole fraction:

$$E \ [wt\%] = 100 * (fE * 28.06) / ((fE * 28.06) + ((1-fE) * 42.08))$$

The comonomer sequence distribution at the triad level was determined using the analysis method of Kakugo et al. (Kakugo, M., Naito, Y., Mizunuma, K., Miyatake, T. Macromolecules 15 (1982) 1150). This method was chosen for its robust nature and integration regions slightly adjusted to increase applicability to a wider range of comonomer contents.

The relative content of isolated to block ethylene incorporation was calculated from the triad sequence distribution using the following relationship (equation (I)):

$$I(E) = \frac{fPEP}{(fEEE + fPEE + fPEP)} \times 100 \qquad (I)$$

wherein

    I(E) is the relative content of isolated to block ethylene sequences [in %];
    fPEP is the mol fraction of propylene/ethylene/propylene sequences (PEP) in the sample;
    fPEE is the mol fraction of propylene/ethylene/ethylene sequences (PEE) and of ethylene/ethylene/propylene sequences (EEP) in the sample;
    fEEE is the mol fraction of ethylene/ethylene/ethylene sequences (EEE) in the sample Bulk density, BD, is measured according ASTM D 1895

Particle Size Distribution, PSD
Coulter Counter LS 200 at room temperature with heptane as medium.

The xylene solubles (XCS, wt.-%): Content of xylene cold solubles (XCS) is determined at 25 °C according ISO 16152; first edition; 2005-07-01

**Number average molecular weight ($M_n$), weight average molecular weight ($M_w$) and polydispersity (Mw/Mn)** are determined by Gel Permeation Chromatography (GPC) according to the following method:

The weight average molecular weight Mw and the polydispersity (Mw/Mn), wherein Mn is the number average molecular weight and Mw is the weight average molecular weight) is measured by a method based on ISO 16014-1:2003 and ISO 16014-4:2003. A Waters Alliance GPCV 2000 instrument, equipped with refractive index detector and online viscosimeter was used with 3 x TSK-gel columns (GMHXL-HT) from TosoHaas and 1,2,4-trichlorobenzene (TCB, stabilized with 200 mg/L 2,6-Di tert butyl-4-methyl-phenol) as solvent at 145 °C and at a constant flow rate of 1 mL/min. 216.5 $\mu$L of sample solution were injected per analysis. The column set was calibrated using relative calibration with 19 narrow MWD polystyrene (PS) standards in the range of 0.5 kg/mol to 11 500 kg/mol and a set of well-characterized broad polypropylene standards. All samples were prepared by dissolving 5-10 mg of polymer in 10 mL (at 160 °C) of stabilized TCB (same as mobile phase) and keeping for 3 hours with continuous shaking prior sampling in into the GPC instrument.

**DSC analysis, melting temperature ($T_m$) and heat of fusion ($H_f$), crystallization temperature ($T_c$) and heat of crystallization ($H_c$):** measured with a TA Instrument Q2000 differential scanning calorimetry (DSC) on 5 to 7 mg samples. DSC is run according to ISO 11357 / part 3 /method C2 in a heat / cool / heat cycle with a scan rate of 10 °C/min in the temperature range of -30 to +225°C. Crystallization temperature and heat of crystallization ($H_c$) are determined from the cooling step, while melting temperature and heat of fusion ($H_f$) are determined from the second heating step.

**The glass transition temperature Tg** is determined by dynamic mechanical analysis according to ISO 6721-7. The measurements are done in torsion mode on compression moulded samples (40x10x1 $mm^3$) between -100 °C and +150 °C with a heating rate of 2 °C/min and a frequency of 1 Hz.

**Tensile modulus** in machine and transverse direction were determined according to ISO 527-3 at 23°C on on air cooled blown films with a thickness of 50 $\mu$m produced as indicated below. Testing was performed at a cross head speed of 1 mm/min.

**Dart-drop:** Impact Strength was determined on Dart-drop (g/50%). Dart-drop is measured using ISO 7765-1, method "A". A dart with a 38 mm diameter hemispherical head is dropped from a height of 0.66 m onto a film sample clamped over a hole. If the specimen fails, the weight of the dart is reduced and if it does not fail the weight is increased. At least 20 specimens are tested. The weight resulting in failure of 50% of the specimens is calculated and this provides the dart drop impact (DDI) value (g). The relative DDI (g/ m) is then calculated by dividing the DDI by the thickness of the film.

**Relative total Penetration Energy:**

The impact strength of films is determined by the "Dynatest" method according to ISO 7725-2 at 0°C on air cooled blown films with a thickness of 50 $\mu$m produced as indicated below. The value "Wbreak" [J/mm] represents the relative total penetration energy per mm thickness that a film can absorb before it breaks divided by the film thickness. The higher this value, the tougher the material is.

**Tear resistance (determined as Elmendorf tear (N)):** Applies both for the measurement in machine direction and transverse direction. The tear strength is measured using the ISO 6383/2 method. The force required to propagate tearing across a film sample is measured using a pendulum device. The pendulum swings under gravity through an arc, tearing the specimen from pre-cut slit. The film sample is fixed on one side by the pendulum and on the other side by a stationary clamp. The tear resistance is the force required to tear the specimen. The relative tear resistance (N/mm) is then calculated by dividing the tear resistance by the thickness of the film. Air cooled blown films with a thickness of 50 $\mu$m produced as indicated below were used for this test.

**Transparency, haze and clarity** were determined according to ASTM D1003-00 on on air cooled blown films with a thickness of 50 $\mu$m produced as indicated below.

## 2. Examples

The catalyst used in the polymerization process for the propylene copolymer of the inventive example (IE1) was produced as follows:

*Used chemicals:*

    20 % solution in toluene of butyl ethyl magnesium (Mg(Bu)(Et), BEM), provided by Chemtura

    2-ethylhexanol, provided by Amphochem

3-Butoxy-2-propanol - (DOWANOL™ PnB), provided by Dow
bis(2-ethylhexyl)citraconate, provided by SynphaBase
$TiCl_4$, provided by Millenium Chemicals
Toluene, provided by Aspokem
Viscoplex® 1-254, provided by Evonik
Heptane, provided by Chevron

*Preparation of a Mg complex*

First a magnesium alkoxide solution was prepared by adding, with stirring (70 rpm), into 1 1 kg of a 20 wt-% solution in toluene of butyl ethyl magnesium (Mg(Bu)(Et), BEM), a mixture of 4.7 kg of 2-ethylhexanol and 1.2 kg of butoxypropanol in a 20 l stainless steel reactor. During the addition, the reactor contents were maintained below 45 °C. After addition was completed, mixing (70 rpm) of the reaction mixture was continued at 60 °C for 30 minutes. After cooling to room temperature 2.3 kg g of the donor bis(2-ethylhexyl)citraconate was added to the Mg-alkoxide solution keeping temperature below 25 °C. Mixing was continued for 15 minutes under stirring (70 rpm)

*Preparation of solid catalyst component*

20.3 kg of $TiCl_4$ and 1.1 kg of toluene were added into a 20 1 stainless steel reactor. Under 350 rpm mixing and keeping the temperature at 0 °C, 14.5 kg of the Mg complex prepared in example 1 was added during 1.5 hours. 1.7 l of Viscoplex® 1-254 and 7.5 kg of heptane were added and after 1 hour mixing at 0 °C the temperature of the formed emulsion was raised to 90 °C within 1 hour. After 30 minutes mixing was stopped catalyst droplets were solidified and the formed catalyst particles were allowed to settle. After settling (1 hour), the supernatant liquid was siphoned away.
Then the catalyst particles were washed with 45 kg of toluene at 90°C for 20 minutes followed by two heptane washes (30 kg, 15 min). During the first heptane wash, the temperature was decreased to 50 °C and during the second wash to room temperature.
The solid catalyst component was used along with triethyl-aluminium (TEAL) as co-catalyst and dicyclo pentyl dimethoxy silane (D-donor) as donor.
CE1 is the commercial grade Borpure RB501BF available from Borealis Polyolefine GmbH, Austria, a propylene-ethylene random copolymer having a melting point of 140°C and an $MFR_2$ (230 °C) of 1.9 g/10min. CE2 is the commercial grade Borclear RB709CF available from Borealis Polyolefine GmbH, Austria, an α-nucleated propylene-ethylene random copolymer having a melting point of 140°C and an $MFR_2$ (230 °C) of 1.5 g/10min.
The aluminium to donor ratio, the aluminium to titanium ratio and the polymerization conditions are indicated in table 1.

**Table 1a:** Preparation of the Examples

| | | IE1 | CE1 | CE2 |
|---|---|---|---|---|
| TEAL/Ti | [mol/mol] | 73 | | |
| TEAL/Donor | [mol/mol] | 10 | | |
| **Loop (R-PP1)** | | | | |
| Time | [h] | 0.5 | | |
| Temperature | [°C] | 70 | | |
| $MFR_2$ | [g/10min] | 2.0 | | |
| XCS | [wt.-%] | 9.2 | | |
| C2 content | [mol-%] | 5.0 | | |
| $H_2$/C3 ratio | [mol/kmol] | 0.39 | | |
| C2/C3 ratio | [mol/kmol] | 7.3 | | |
| amount | [wt.-%] | 40 | | |
| **1 GPR (R-PP2)** | | | | |
| Time | [h] | 3.1 | | |
| Temperature | [°C] | 85 | | |

(continued)

| 1 GPR (R-PP2) | | | | |
|---|---|---|---|---|
| MFR$_2$ | [g/10min] | 2.0 | | |
| C2 content | [mol-%] | 11.1 | | |
| H$_2$/C3 ratio | [mol/kmol] | 4.6 | | |
| C2/C3 ratio | [mol/kmol] | 37.3 | | |
| amount | [wt.-%] | 60 | | |
| **Final** | | | | |
| MFR$_2$ | [g/10min] | 2.0 | 1.9 | 1.5 |
| C2 content | [mol-%] | 8.7 | 6.2 | 8.5 |
| XCS | [wt.-%] | 19.8 | 8.5 | 11.5 |
| Tm | [°C] | 140 | 140 | 140* |
| Tc | [°C] | 105** | 97 | 111 |
| Mw | [kg/mol] | 292 | | 348 |
| Mw/Mn | [-] | 4.0 | 4.5 | 4.0 |
| 2,1 | [%] | n.d. | n.d. | n.d. |
| Tg below -20 °C | [°C] | n.d. | n.d. | n.d. |
| Tg above -20 °C | [°C] | -4.6 | -6.0 | -8.0 |
| n.d. not detectable<br>* 2$^{nd}$ Tm at 124°C<br>** Tc of IE2 (nucleated) 119°C | | | | |

The films for the examples are produced on a Windmöller & Hölscher (W&H) monolayer blown film line (W & H Varex 60).

Extruder: Varex E 60.30D, cylinder diameter 60mm, screw length to diameter ratio of 30, 4 heated and 3 cooled zones

Blown film die diameter: 200 mm

Die gap: 0.8-1.2 mm

Extruder temperatures: 230 °C

Die temperature: 220 °C

Throughput: 60 kg/h

Melt temperature, melt pressure & screw speed: see table 2 BUR: 2.5

Frost line height: 700 mm

Take off speed: 14.2 m/min

**Table 2:** Properties of the Examples

| | | IE1 | IE2[1)] | CE1 | CE2 |
|---|---|---|---|---|---|
| melt pressure | [bar] | 88 | 88 | 121 | 149 |

(continued)

|  |  | IE1 | IE2[1] | CE1 | CE2 |
|---|---|---|---|---|---|
| screw speed | [1/min] | 50 | 50 | 70 | 50 |
| melt temperature | [°C] | 238 | 238 | 238 | 238 |
| film thickness | [μm] | 50 | 52 | 50 | 50 |
| transparency | [%] | 94 | 93 | 94 | 94 |
| haze | [%] | 12 | 9 | 23 | 4 |
| clarity | [%] | 94 | 93 | 85 | 97 |
| tensile modulus MD | [MPa] | 484 | 545 | 788 | 800 |
| tensile modulus TD | [MPa] | 472 | 538 | 808 | 750 |
| DDI | [F50/g] | 268 | 143 | 57 | 70 |
| tear resistance MD | [N/mm] | 7.6 | 5.6 | 6.0 | 4.8 |
| tear resistance TD | [N/mm] | 14.7 | 9.4 | 9.0 | 10.3 |
| Dyna (23 °C) | [J/mm] | 11.7 | 8.6 | - | 6.0 |

I) is inventive example 1 containing 2000 ppm Millad 3988i, i.e. an α-nucleatingagent based on a sorbitol derivative

**Table 3:** Relative content of isolated to block ethylene sequences (I(E))

|  |  | IE1 | IE2 | CE1 | CE2 |
|---|---|---|---|---|---|
| I(E)[1] | [%] | 59.8 | 59.8 | 73.6 | 68.7 |
| fEEE | [mol.-%] | 1.19 | 1.19 | 0.6 | 0.69 |
| fEEP | [mol.-%] | 2.34 | 2.34 | 1.05 | 2.04 |
| fPEP | [mol.-%] | 5.26 | 5.26 | 4.6 | 5.98 |
| fPPP | [mol.-%] | 79.76 | 79.76 | 83.56 | 76.63 |
| fEPP | [mol.-%] | 10.73 | 10.73 | 9.49 | 11.22 |
| fEPE | [mol.-%] | 0.73 | 0.73 | 0.69 | 0.67 |

[1]

$$I(E) = \frac{fPEP}{(fEEE + f\text{PEE} + fPEP)} \times 100 \, (\text{I})$$

## Claims

1. Unoriented cast film comprising a propylene copolymer (R-PP) having

   (a) a comonomer content in the range of 2.5 to 11.5 mol.-%;
   (b) a melt flow rate MFR2 (230 °C) measured according to ISO 1133 in the range of 6.0 to 16.0 g/10min; and
   (c) a relative content of isolated to block ethylene sequences (I(E)) in the range of 45.0 to 68.0 %, wherein the I(E) content is defined by equation (I)

$$I(E) = \frac{fPEP}{(fEEE + f\text{PEE} + fPEP)} \times 100 \qquad (\text{I})$$

   wherein

I(E) is the relative content of isolated to block ethylene sequences [in %];
fPEP is the mol fraction of propylene/ethylene/propylene sequences (PEP) in the sample;
fPEE is the mol fraction of propylene/ethylene/ethylene sequences (PEE) and of ethylene/ethylene/propylene sequences (EEP) in the sample;
fEEE is the mol fraction of ethylene/ethylene/ethylene sequences (EEE) in the sample
wherein all sequence concentrations being based on a statistical triad analysis of $^{13}$C-NMR data.

2. Unoriented blown film comprising a propylene copolymer (R-PP) having

   (a) a comonomer content in the range of 2.5 to 11.5 mol.-%;
   (b) a melt flow rate MFR2 (230 °C) measured according to ISO 1133 in the range of 1.0 to 4.0 g/10min; and
   (c) a relative content of isolated to block ethylene sequences (I(E)) in the range of 45.0 to 68.0 %, wherein the I(E) content is defined by equation (I)

$$I(E) = \frac{fPEP}{(fEEE + fPEE + fPEP)} \times 100 \qquad (I)$$

   wherein

   I(E) is the relative content of isolated to block ethylene sequences [in %];
   fPEP is the mol fraction of propylene/ethylene/propylene sequences (PEP) in the sample;
   fPEE is the mol fraction of propylene/ethylene/ethylene sequences (PEE) and of ethylene/ethylene/propylene sequences (EEP) in the sample;
   fEEE is the mol fraction of ethylene/ethylene/ethylene sequences (EEE) in the sample
   wherein all sequence concentrations being based on a statistical triad analysis of $^{13}$C-NMR data

3. Unoriented cast or blown film according to claim 1 or 2, wherein said propylene copolymer (R-PP) has a xylene cold soluble fraction (XCS) in the range of 4.0 to 25.0 wt.-%.

4. Unoriented cast or blown film according to claim 1 to 3, wherein said propylene copolymer (R-PP) has

   (a) a glass transition temperature in the range of -12 to +2 °C; and/or
   (b) no glass transition temperature below -20 °C.

5. Unoriented cast or blown film according to any one of the preceding claims, wherein said propylene copolymer (R-PP) has

   (a) a melting temperature in the range of 135 to 155 °C;
   and/or
   (b) a crystallization temperature in the range of 99 to 110 °C.

6. Unoriented cast or blown film according to any one of the preceding claims, wherein said propylene copolymer (R-PP)

   (a) has 2,1 regio-defects of at most 0.4 % determined by $^{13}$C-NMR spectroscopy;
   and/or
   (b) is monophasic.

7. Unoriented cast or blown film according to any one of the preceding claims, wherein the comonomer is selected from ethylene, $C_4$ to $C_{12}$ α-olefin, and mixtures thereof, preferably the comonomer is ethylene.

8. Unoriented cast or blown film according to any one of the preceding claims, wherein said propylene copolymer (R-PP) comprises two fractions, a first propylene copolymer fraction (R-PP1) and a second propylene copolymer fraction (R-PP2), said first propylene copolymer fraction (R-PP1) differs from said second propylene copolymer fraction (R-PP2) in the comonomer content.

9. Unoriented cast or blown film according to claim 8, wherein

(a) the weight ratio between the first propylene copolymer fraction (R-PP1) and the second propylene copolymer fraction (R-PP2) [(R-PP1):(R-PP2)] is 70:30 to 30:70;
and/or
(b) the comonomers for the first propylene copolymer fraction (R-PP1) and the second propylene copolymer fraction (R-PP2) are selected from ethylene, $C_4$ to $C_{12}$ $\alpha$-olefin, and mixtures thereof, preferably the comonomers for the first propylene copolymer fraction (R-PP1) and the second propylene copolymer fraction (R-PP2) are the same and are selected from ethylene, $C_4$ to $C_{12}$ $\alpha$-olefin, and mixtures thereof.

**10.** Unoriented cast or blown film according to claim 8 or 9, wherein

(a) the first propylene copolymer fraction (R-PP1) is the comonomer lean fraction and the second propylene copolymer fraction (R-PP2) is the comonomer rich fraction
and/or
(b) the first propylene copolymer fraction (R-PP1) has a lower comonomer content than the propylene copolymer (R-PP).

**11.** Unoriented cast or blown film to any one of the preceding claims 8 to 10, wherein

(a) the first propylene copolymer fraction (R-PP1) has a comonomer content in the range of 1.0 to 6.5 mol-% based on the first propylene copolymer fraction (R-PP1);
and/or, preferably and,
(b) the second propylene copolymer fraction (R-PP2) has a comonomer content in the range of more than 7.0 to 15.0 mol-% based on the second propylene copolymer fraction (R-PP2).

**12.** Unoriented cast or blown film according to any one of the preceding claims 8 to 11, wherein

(a) the first random propylene copolymer fraction (R-PP1) and the second random propylene copolymer fraction (R-PP2) fulfill together the in-equation (III)

$$\frac{Co\ (R-PP2)}{Co\ (R-PP1)} \geq 1.0 \qquad (III);$$

wherein

Co (R-PP1) is the comonomer content [mol.-%] of the first propylene copolymer fraction (R-PP1),
Co (R-PP2) is the comonomer content [mol.-%] of the second propylene copolymer fraction (R-PP2).
and/or,
(b) the first random propylene copolymer fraction (R-PP1) and the random propylene copolymer fraction (R-PP) fulfill together the in-equation (IV)

$$\frac{Co\ (R-PP)}{Co\ (R-PP1)} \geq 1.0 \qquad (IV)$$

wherein

Co (R-PP1) is the comonomer content [mol.-%] of the first propylene copolymer fraction (R-PP1),
Co (R-PP) is the comonomer content [mol.-%] of the propylene copolymer (R-PP).

**13.** Unoriented film according to any one of claims 2 to 12, wherein the film is an air cooled blown film.

**14.** Process for preparing the unoriented cast or blown film according to claims 1 to 13 comprising the steps of producing the propylene copolymer (R-PP) according to any one of the preceding claims 1 to 13, wherein the propylene copolymer (R-PP) has been produced in the presence of

(a) a Ziegler-Natta catalyst (ZN-C) comprises a titanium compound (TC), a magnesium compound (MC) and an internal donor (ID), wherein said internal donor (ID) is a non-phthalic acid ester,

(b) optionally a co-catalyst (Co), and
(c) optionally an external donor (ED),

the propylene copolymer (R-PP) having a comonomer content in the range of 2.5 to 11.5 mol.-%, and extruding the molten propylene copolymer (R-PP) through a slot extrusion die onto a chill roll to cool the polymer to a solid film in case the unoriented cast film is formed, or extruding the propylene copolymer (R-PP) melt through an annular die and blowing it into a tubular film by forming a bubble which is collapsed between nip rollers after solidification in case the unoriented blown film is formed.

15. Process according to claim 14, wherein

(a) the internal donor (ID) is selected from optionally substituted malonates, maleates, succinates, glutarates, cyclohexene-1,2-dicarboxylates, benzoates and derivatives and/or mixtures thereof, preferably the internal donor (ID) is a citraconate;
(b) the molar-ratio of co-catalyst (Co) to external donor (ED) [Co/ED] is 5 to 45.

16. Process according to claim 14 or 15, wherein the propylene copolymer (R-PP) is produced in a sequential polymerization process comprising at least two reactors (R1) and (R2), in the first reactor (R1) the first propylene copolymer fraction (R-PP1) is produced and subsequently transferred into the second reactor (R2), in the second reactor (R2) the second propylene copolymer fraction (R-PP2) is produced in the presence of the first propylene copolymer fraction (R-PP1).

**Patentansprüche**

1. Nicht gereckte Gießfolie, umfassend ein Propylen-Copolymer (R-PP) mit

(a) einem Comonomer-Gehalt im Bereich von 2,5 bis 11,5 Mol-% ;
(b) einer Schmelze-Fließ-Rate $MFR_2$ (230°C), gemessen gemäß ISO 1133, im Bereich von 6,0 bis 16,0 g/10 min; und
(c) einem relativen Gehalt an isolierten zu Block-Ethylen-Sequenzen (I(E)) im Bereich von 45,0 bis 68,0 %, wobei der Gehalt an I(E) durch Gleichung (I) definiert wird

$$I(E) = \frac{fPEP}{(fEEE + fPEE + fPEP)} \times 100 \qquad (\mathrm{I})$$

worin

I(E) der relative Gehalt an isolierten zu Block-Ethylen-Sequenzen [in %] ist;
fPEP der Molenbruch von Propylen / Ethylen / Propylen-Sequenzen (PEP) in der Probe ist;
fPEE der Molenbruch von Propylen / Ethylen / Ethylen-Sequenzen (PEE) und von Ethylen / Ethylen / Propylen-Sequenzen (EEP) in der Probe ist;
fEEE der Molenbruch von Ethylen / Ethylen / Ethylen-Sequenzen (EEE) in der Probe ist,

wobei alle Sequenz-Konzentrationen auf einer statistischen Triaden-Analyse von $^{13}$C-NMR-Daten basieren.

2. Nicht gereckte Blasfolie, umfassend ein Propylen-Copolymer (R-PP) mit

(a) einem Comonomer-Gehalt im Bereich von 2,5 bis 11,5 Mol-%;
(b) einer Schmelze-Fließ-Rate $MFR_2$ (230°C), gemessen gemäß ISO 1133, im Bereich von 1,0 bis 4,0 g/10 min; und
(c) einem relativen Gehalt an isolierten zu Block-Ethylen-Sequenzen (I(E)) im Bereich von 45,0 bis 68, 0 %, wobei der Gehalt an I(E) durch die Gleichung (I) definiert wird

$$I(E) = \frac{fPEP}{(fEEE + fPEE + fPEP)} \times 100 \qquad (\mathrm{I})$$

worin

I(E) der relative Gehalt an isolierten zu Block-Ethylen-Sequenzen [in %] ist;
fPEP der Molenbruch von Propylen / Ethylen / Propylen-Sequenzen (PEP) in der Probe ist;
fPEE der Molenbruch von Propylen / Ethylen / Ethylen-Sequenzen (PEE) und von Ethylen / Ethylen / Propylen-Sequenzen (EEP) in der Probe ist;
fEEE der Molenbruch von Ethylen / Ethylen / Ethylen-Sequenzen (EEE) in der Probe ist,

wobei alle Sequenz-Konzentrationen auf einer statistischen Triadenanalyse von $^{13}$C-NMR-Daten basieren.

3. Nicht gereckte Gieß- oder Blasfolie nach Anspruch 1 oder 2, wobei das Propylen-Copolymer (R-PP) eine in kaltem Xylol lösliche Fraktion (XCS) im Bereich von 4,0 bis 25,0 Gew.-% aufweist.

4. Nicht gereckte Gieß- oder Blasfolie nach Anspruch 1 bis 3, wobei das Propylen-Copolymer (R-PP) aufweist

(a) eine Glas-Übergangs-Temperatur im Bereich von -12 bis +2°C;
und/oder
(b) keine Glas-Übergangs-Temperatur unter -20°C.

5. Nicht gereckte Gieß- oder Blasfolie nach einem der vorangehenden Ansprüche, wobei das Propylen-Copolymer (R-PP) aufweist

(a) eine Schmelz-Temperatur im Bereich von 135 bis 155°C;
und/oder
(b) eine Kristallisations-Temperatur im Bereich von 99 bis 110°C.

6. Nicht gereckte Gieß- oder Blasfolie nach einem der vorangehenden Ansprüche, wobei das Propylen-Copolymer (R-PP)

(a) 2,1-Regio-Defekte von höchstens 0,4 %, bestimmt durch $^{13}$C-NMR-Spektroskopie, aufweist;
und/oder
(b) einphasig ist.

7. Nicht gereckte Gieß- oder Blasfolie nach einem der vorangehenden Ansprüche, wobei das Comonomer aus Ethylen, $C_4$ bis $C_{12}$ $\alpha$-Olefin und Gemischen davon ausgewählt ist, vorzugsweise ist das Comonomer Ethylen.

8. Nicht gereckte Gieß- oder Blasfolie nach einem der vorangehenden Ansprüche, wobei das Propylen-Copolymer (R-PP) zwei Fraktionen umfasst, eine erste Propylen-Copolymer-Fraktion (R-PP1) und eine zweite Propylen-Copolymer-Fraktion (R-PP2), wobei sich die erste Propylen-Copolymer-Fraktion (R-PP1) von der zweiten Propylen-Copolymer-Fraktion (R-PP2) im Comonomer-Gehalt unterscheidet.

9. Nicht gereckte Gieß- oder Blasfolie nach Anspruch 8, wobei

(a) das Gewichts-Verhältnis zwischen der ersten Propylen-Copolymer-Fraktion (R-PP1) und der zweiten Propylen-Copolymer-Fraktion (R-PP2) [(R-PP1) : (R-PP2)] 70:30 bis 30:70 beträgt;
und/oder
(b) die Comonomere für die erste Propylen-Copolymer-Fraktion (R-PP1) und die zweite Propylen-Copolymer-Fraktion (R-PP2) aus Ethylen, $C_4$ bis $C_{12}$ $\alpha$-Olefin und Gemischen davon ausgewählt sind, vorzugsweise sind die Comonomere für die erste Propylen-Copolymer-Fraktion (R-PP1) und die zweite Propylen-Copolymer-Fraktion (R-PP2) gleich und sind aus Ethylen, $C_4$ bis $C_{12}$ $\alpha$-Olefin und Gemischen davon ausgewählt.

10. Nicht gereckte Gieß- oder Blasfolie nach Anspruch 8 oder 9, wobei

(a) die erste Propylen-Copolymer-Fraktion (R-PP1) die Comonomer-arme Fraktion ist und die zweite Propylen-Copolymer-Fraktion (R-PP2) die Comonomer-reiche Fraktion ist,
und/oder
(b) die erste Propylen-Copolymer-Fraktion (R-PP1) einen geringeren Comonomer-Gehalt als das Propylen-Copolymer (R-PP) aufweist.

**11.** Nicht gereckte Gieß- oder Blasfolie nach einem der vorangehenden Ansprüche 8 bis 10, wobei

(a) die erste Propylen-Copolymer-Fraktion (R-PP1) einen Comonomer-Gehalt im Bereich von 1,0 bis 6,5 Mol-%, bezogen auf die erste Propylen-Copolymer-Fraktion (R-PP1), aufweist;
und/oder, vorzugsweise und,
(b) die zweite Propylen-Copolymer-Fraktion (R-PP2) einen Comonomer-Gehalt im Bereich von mehr als 7,0 bis 15,0 Mol-%, bezogen auf die zweite Propylen-Copolymer-Fraktion (R-PP2), aufweist.

**12.** Nicht gereckte Gieß- oder Blasfolie nach einem der vorangehenden Ansprüche 8 bis 11, wobei

(a) die erste statistische Propylen-Copolymer-Fraktion (R-PP1) und die zweite statistische Propylen-Copolymer-Fraktion (R-PP2) zusammen die Ungleichung (III) erfüllen

$$\frac{Co(R-PP2)}{Co(R-PP1)} \geq 1,0 \qquad (\text{III})$$

worin

Co (R-PP1) der Comonomer-Gehalt [Mol-%] der ersten Propylen-Copolymer-Fraktion (R-PP1) ist,
Co (R-PP2) der Comonomer-Gehalt [Mol-%] der zweiten Propylen-Copolymer-Fraktion (R-PP2) ist,

und/oder
(b) die erste statistische Propylen-Copolymer-Fraktion (R-PP1) und die statistische Propylen-Copolymer-Fraktion (R-PP) zusammen die Ungleichung (IV) erfüllen

$$\frac{Co(R-PP)}{Co(R-PP1)} \geq 1,0 \qquad (\text{IV})$$

worin

Co (R-PP1) der Comonomer-Gehalt [Mol-%] der ersten Propylen-Copolymer-Fraktion (R-PP1) ist,
Co (R-PP) der Comonomer-Gehalt [Mol-%] des Propylen-Copolymers (R-PP) ist.

**13.** Ungereckte Folie nach einem der Ansprüche 2 bis 12, wobei die Folie eine luftgekühlte Blasfolie ist.

**14.** Verfahren zur Herstellung der nicht gereckten Gieß- oder Blasfolie nach den Ansprüchen 1 bis 13, umfassend die Schritte der Herstellung des Propylen-Copolymers (R-PP) nach einem der vorangehenden Ansprüche 1 bis 13, wobei das Propylen-Copolymer (R-PP) hergestellt wurde in Gegenwart von

(a) einem Ziegler-Natta-Katalysator (ZN-C), der eine Titan-Verbindung (TC), eine Magnesium-Verbindung (MC) und einen inneren Donor (ID) umfasst, wobei der innere Donor (ID) ein Nicht-Phthalsäureester ist,
(b) gegebenenfalls einem Cokatalysator (Co) und
(c) gegebenenfalls einem äußeren Donor (ED),

wobei das Propylen-Copolymer (R-PP) einen Comonomer-Gehalt im Bereich von 2,5 bis 11,5 Mol-% aufweist und Extrudieren des geschmolzenen Propylen-Copolymers (R-PP) durch eine Schlitz-Extrusionsdüse auf eine Kühlwalze, um das Polymer zu einer festen Folie zu kühlen, im Fall, dass die nicht gereckte Gießfolie gebildet wird, oder Extrudieren der Propylen-Copolymer (R-PP)-Schmelze durch eine ringförmige Düse und Blasen zu einer schlauchförmigen Folie, indem eine Blase, die nach Verfestigung zwischen Quetschwalzen zusammenfällt, im Fall, dass die nicht gereckte Blasfolie gebildet wird.

**15.** Verfahren nach Anspruch 14, wobei

(a) der innere Donor (ID) aus gegebenenfalls substituierten Malonaten, Maleaten, Succinaten, Glutaraten, Cyclohexen-1,2-dicarboxylaten, Benzoaten und Derivaten und/oder Gemischen davon ausgewählt ist, vorzugsweise ist der innere Donor (ID) ein Citraconat;

(b) das Molverhältnis von Co-Katalysator (Co) zu äußerem Donor (ED) [Co/ED] 5 bis 45 beträgt.

16. Verfahren nach Anspruch 14 oder 15, wobei das Propylen-Copolymer (R-PP) in einem sequenziellen Polymerisations-Verfahren mit mindestens zwei Reaktoren (R1) und (R2) hergestellt wird, wobei im ersten Reaktor (R1) die erste Propylen-Copolymer-Fraktion (R-PP1) hergestellt wird und anschließend in den zweiten Reaktor (R2) überführt wird, im zweiten Reaktor (R2) die zweite Propylen-Copolymer-Fraktion (R-PP2) in Gegenwart der ersten Propylen-Copolymer-Fraktion (R-PP1) hergestellt wird.

**Revendications**

1. Film coulé non orienté comprenant un copolymère de propylène (R-PP)

(a) possédant une teneur en comonomères située dans la plage allant de 2,5 à 11,5 % en moles ;
(b) présentant un indice de fluage MFR2 (230°C), mesuré conformément à la norme ISO 1133, situé dans la plage allant de 6,0 à 16,0 g/10 min ; et
(c) possédant une teneur relative en séquences d'éthylène isolées en blocs (I(E)) située dans la plage allant de 45,0 à 68,0 %, laquelle teneur I(E) est définie par l'équation (I)

$$I(E) = \frac{fPEP}{(fEEE + fPEE + fPEP)} \times 100 \qquad (I)$$

dans laquelle

I(E) est la teneur relative en séquences d'éthylène isolées en blocs [en %] ;
fPEP est la fraction molaire des séquences de propylène/ éthylène/propylène (PEP) dans l'échantillon ;
fPEE est la fraction molaire des séquences de propylène/ éthylène/éthylène (PEE) et des séquences d'éthylène/ éthylène/propylène (EEP) dans l'échantillon ;
fEEE est la fraction molaire des séquences d'éthylène/ éthylène/éthylène (EEE) dans l'échantillon ;
toutes les concentrations de séquences étant basées sur une analyse statistique de triades des données de RMN-[13]C.

2. Film soufflé non orienté comprenant un copolymère de propylène (R-PP)

(a) possédant une teneur en comonomères située dans la plage allant de 2,5 à 11,5 % en moles ;
(b) présentant un indice de fluage MFR2 (230°C), mesuré conformément à la norme ISO 1133, situé dans la plage allant de 1,0 à 4,0 g/10 min ; et
(c) possédant une teneur relative en séquences d'éthylène isolées en blocs (I(E)) située dans la plage allant de 45,0 à 68,0 %, laquelle teneur I(E) est définie par l'équation (I)

$$I(E) = \frac{fPEP}{(fEEE + fPEE + fPEP)} \times 100 \qquad (I)$$

dans laquelle

I(E) est la teneur relative en séquences d'éthylène isolées en blocs [en %] ;
fPEP est la fraction molaire des séquences de propylène/ éthylène/propylène (PEP) dans l'échantillon ;
fPEE est la fraction molaire des séquences de propylène/ éthylène/éthylène (PEE) et des séquences d'éthylène/ éthylène/propylène (EEP) dans l'échantillon ;
fEEE est la fraction molaire des séquences d'éthylène/ éthylène/éthylène (EEE) dans l'échantillon ;
toutes les concentrations de séquences étant basées sur une analyse statistique de triades des données de RMN-[13]C.

**3.** Film soufflé ou coulé non orienté selon la revendication 1 ou 2, dans lequel ledit copolymère de propylène (R-PP) possède une fraction soluble dans le xylène froid (XCS) située dans la plage allant de 4,0 à 25,0 % en poids.

**4.** Film soufflé ou coulé non orienté selon les revendications 1 à 3, dans lequel ledit copolymère de propylène (R-PP)

(a) présente une température de transition vitreuse située dans la plage allant de -12 à +2°C ;
et/ou
(b) ne présente pas de température de transition vitreuse inférieure à -20°C.

**5.** Film soufflé ou coulé non orienté selon l'une quelconque des revendications précédentes, dans lequel ledit copolymère de propylène (R-PP) présente

(a) un point de fusion situé dans la plage allant de 135 à 155°C ;
et/ou
(b) un point de cristallisation situé dans la plage allant de 99 à 110°C.

**6.** Film soufflé ou coulé non orienté selon l'une quelconque des revendications précédentes, dans lequel ledit copolymère de propylène (R-PP)

(a) possède au plus 0,4 % de régie-défauts 2,1, déterminés par spectroscopie RMN-13C ;
et/ou
(b) est monophasique.

**7.** Film soufflé ou coulé non orienté selon l'une quelconque des revendications précédentes, dans lequel le comonomère est choisi parmi l'éthylène, une $\alpha$-oléfine en $C_4$ à $C_{12}$, et leurs mélanges, de préférence le comonomère est l'éthylène.

**8.** Film soufflé ou coulé non orienté selon l'une quelconque des revendications précédentes, dans lequel ledit copolymère de propylène (R-PP) comprend deux fractions, une première fraction de copolymère de propylène (R-PP1) et une deuxième fraction de copolymère de propylène (R-PP2), ladite fraction de copolymère de propylène (R-PP1) différant de ladite deuxième fraction de copolymère de propylène (R-PP2) par la teneur en comonomères.

**9.** Film soufflé ou coulé non orienté selon la revendication 8, dans lequel

(a) le rapport en poids entre la première fraction de copolymère de propylène (R-PP1) et la deuxième fraction de copolymère de propylène (R-PP2) [(R-PP1)/(R-PP2)] est de 70/30 à 30/70 ;
et/ou
(b) les comonomères pour la première fraction de copolymère de propylène (R-PP1) et la deuxième fraction de copolymère de propylène (R-PP2) sont choisis parmi l'éthylène, une $\alpha$-oléfine en $C_4$ à $C_{12}$, et leurs mélanges, de préférence les comonomères pour la première fraction de copolymère de propylène (R-PP1) et la deuxième fraction de copolymère de propylène (R-PP2) sont les mêmes et sont choisis parmi l'éthylène, une $\alpha$-oléfine en $C_4$ à $C_{12}$, et leurs mélanges.

**10.** Film soufflé ou coulé non orienté selon la revendication 8 ou 9, dans lequel

a) la première fraction de copolymère de propylène (R-PP1) est la fraction pauvre en comonomères et la deuxième fraction de copolymère de propylène (R-PP2) est la fraction riche en comonomères,
et/ou
(b) la première fraction de copolymère de propylène (R-PP1) a une teneur en comonomères inférieure à celle du copolymère de propylène (R-PP).

**11.** Film soufflé ou coulé non orienté selon l'une quelconque des revendications 8 à 10, dans lequel

(a) la première fraction de copolymère de propylène (R-PP1) possède une teneur en comonomères située dans la plage allant de 1,0 à 6,5 % en moles par rapport à la première fraction de copolymère de propylène (R-PP1) ;
et/ou, de préférence et,
(b) la deuxième fraction de copolymère de propylène (R-PP2) possède une teneur en comonomères située dans la plage allant de plus de 7,0 à 15,0 % en moles par rapport à la deuxième fraction de copolymère de propylène (R-PP2).

**12.** Film soufflé ou coulé non orienté selon l'une quelconque des revendications 8 à 11, dans lequel

(a) la première fraction de copolymère de propylène (R-PP1) et la deuxième fraction de copolymère de propylène (R-PP2) satisfont ensemble à l'inégalité (III)

$$\frac{Co\ (R-PP2)}{Co\ (R-PP1)} \geq 1,0 \qquad (III)$$

dans laquelle

Co (R-PP1) est la teneur en comonomères [% en moles] de la première fraction de copolymère de propylène (R-PP1),
Co (R-PP2) est la teneur en comonomères [% en moles] de la deuxième fraction de copolymère de propylène (R-PP2), et/ou

(b) la première fraction de copolymère de propylène (R-PP1) et la fraction de copolymère de propylène statistique (R-PP) satisfont ensemble à l'inégalité (IV)

$$\frac{Co\ (R-PP)}{Co\ (R-PP1)} \geq 1,0 \qquad (IV)$$

dans laquelle

Co (R-PP1) est la teneur en comonomères [% en moles] de la première fraction de copolymère de propylène (R-PP1),
Co (R-PP) est la teneur en comonomères [% en moles] du copolymère de propylène (R-PP).

**13.** Film non orienté selon l'une quelconque des revendications 2 à 12, lequel film est un film soufflé refroidi par air.

**14.** Procédé pour préparer le film soufflé ou coulé non orienté selon les revendications 1 à 13, comprenant les étapes de production du copolymère de propylène (R-PP) selon l'une quelconque des revendications 1 à 13, dans laquelle le copolymère de propylène (R-PP) a été produit en présence de

(a) un catalyseur de Ziegler-Natta (ZN-C) comprenant un composé du titane (TC), un composé du magnésium (MC) et un donneur interne (ID), lequel donneur interne (ID) est un ester d'acide non-phtalique,
(b) éventuellement un cocatalyseur (Co), et
(c) éventuellement un donneur externe (ED),

le copolymère de propylène (R-PP) ayant une teneur en comonomères située dans la plage allant de 2,5 à 11,5 % en moles, et
d'extrusion du copolymère de propylène fondu (R-PP) à travers une filière d'extrusion plate sur un rouleau refroidisseur pour refroidir le polymère en un film solide dans le cas où le film coulé non orienté est formé, ou d'extrusion de la masse fondue de copolymère de propylène (R-PP) à travers une filière annulaire et de soufflage de celle-ci en un film tubulaire par formation d'une bulle qui est affaissée entre des rouleaux pinceurs après solidification dans le cas où le film soufflé non orienté est formé.

**15.** Procédé selon la revendication 14, dans lequel

(a) le donneur interne (ID) est choisi parmi les malonates, maléates, succinates, glutarates, cyclohexène-1,2-dicarboxylates et benzoates éventuellement substitués, et leurs dérivés et/ou mélanges, de préférence le donneur interne (ID) est un citraconate ;
(b) le rapport molaire du cocatalyseur (Co) sur le donneur externe (Ed) [Co/ED] est de 5 à 45.

16. Procédé selon la revendication 14 ou 15, dans lequel le copolymère de propylène (R-PP) est produit dans un procédé de polymérisation séquentielle comprenant au moins deux réacteurs (R1) et (R2), la première fraction de copolymère de propylène (R-PP1) est produite dans le premier réacteur (R1) et ensuite transférée dans le deuxième réacteur (R2), la deuxième fraction de copolymère de propylène (R-PP2) est produite dans le deuxième réacteur (R2) en présence de la première fraction de copolymère de propylène (R-PP1).

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0663422 A
- EP 1664162 A
- EP 2386604 A1
- EP 2065407 A1
- EP 2251361 A1
- EP 887379 A
- EP 887380 A
- EP 887381 A
- EP 991684 A
- EP 0887379 A
- WO 9212182 A
- WO 2004000899 A
- WO 2004111095 A
- WO 9924478 A
- WO 9924479 A
- WO 0068315 A
- WO 2012007430 A

### Non-patent literature cited in the description

- *Chemical Reviews,* 2000, vol. 100 (4), 1316-1327
- **HANS ZWEIFEL.** Plastic Additives Handbook. 2001
- **NELLO PASQUINI.** polypropylene handbook. Hanser
- **SINGH, G. ; KOTHARI, A. ; GUPTA, V.** *Polymer Testing,* 2009, vol. 28 (5), 475
- **ZHOU, Z. ; KUEMMERLE, R. ; QIU, X. ; REDWINE, D. ; CONG, R. ; TAHA, A. ; BAUGH, D. ; WINNIFORD, B.** *J. Mag. Reson.,* 2007, vol. 187, 225
- **BUSICO, V. ; CARBONNIERE, P. ; CIPULLO, R. ; PELLECCHIA, R. ; SEVERN, J. ; TALARICO, G.** *Macromol. Rapid Commun.,* 2007, vol. 28, 1128
- **CHENG, H. N.** *Macromolecules,* 1984, vol. 17, 1950
- **L. RESCONI ; L. CAVALLO ; A. FAIT ; F. PIEMONTESI.** *Chem. Rev.,* 2000, vol. 100 (4), 1253
- **W-J. WANG ; S. ZHU.** *Macromolecules,* 2000, vol. 33, 1157
- **WANG, W-J. ; ZHU, S.** *Macromolecules,* 2000, vol. 33, 1157
- **KAKUGO, M. ; NAITO, Y. ; MIZUNUMA, K. ; MIYATAKE, T.** *Macromolecules,* 1982, vol. 15, 1150